(19) Europäisches Patentamt
European Patent Office
Office européen des brevets

(11) **EP 3 276 623 A1**

(12) **EUROPEAN PATENT APPLICATION**

(43) Date of publication:
**31.01.2018 Bulletin 2018/05**

(51) Int Cl.:
**G10L 25/63** *(2013.01)* **G06F 17/24** *(2006.01)*
**G11B 27/36** *(2006.01)* **G09B 5/06** *(2006.01)*

(21) Application number: **17183921.0**

(22) Date of filing: **31.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.07.2016 NZ 72271216**

(71) Applicant: **Booktrack Holdings Limited**
**Takapuna, Auckland 0622 (NZ)**

(72) Inventors:
• **CAMERON, Paul**
  **0620 Auckland (NZ)**
• **WILSON, Craig**
  **0630 Auckland (NZ)**
• **DE VOCHT, Petrus**
  **Wellington (NZ)**
• **MOORE, Brock**
  **0190 Warkworth (NZ)**

(74) Representative: **Harding, Andrew Philip**
**Forresters IP LLP**
**Skygarden**
**Erika-Mann-Strasse 11**
**80636 München (DE)**

(54) **SYSTEM AND METHODS FOR AUTOMATIC-CREATION OF SOUNDTRACKS FOR TEXT**

(57) A method of automatically generating a digital soundtrack intended for synchronised playback with the reading of an associated text, the method executed by a processing device or devices having associated memory. The method comprises syntactically and/or semantically analysing the text at a text segment level to generate an emotional profile for each text segment in the context of a continuous emotion model. The method further comprises generating a soundtrack for the text comprising one or more audio regions that are configured or selected for playback during corresponding text regions of the text, and wherein the audio configured for playback in the audio regions is based on or a function of the emotional profile of one or more of the text segments within the respective text regions.

*FIGURE 1*

Printed by Jouve, 75001 PARIS (FR)

**Description**

**FIELD OF THE INVENTION**

The invention relates to systems and methods for the automatic creation of synchronised soundtracks for playback to a user while they read an associated text. In particular, although not exclusively, the synchronized soundtracks are for electronic media content, such as but not limited to text only or multimedia content comprising text presented in combination with imagery, videos or animations.

**BACKGROUND TO THE INVENTION**

To enhance the reading experience, various systems have been proposed in which audio soundtracks relating to the content of text, such as an e-book, are produced and played to the user while they read the text. Some of these systems aim to synchronise the playback of the soundtrack with the user's reading speed.

One such system is described in the applicant's co-pending international PCT patent application publication WO2013/015694, the contents of which is hereby incorporated by reference in its entirety. In this system, a soundtrack for electronic text, such as an e-book, is produced that comprises audio tracks of different types that are configured to play concurrently and/or sequentially while the user is reading the electronic text. Playback of the soundtrack is synchronised with the reading speed of the user. The soundtrack may comprise a combination of different audio types, including ambient noise, sound effects, and background music that are configured to playback at a specific point or over specific portions of the electronic text in a synchronised manner as the user is reading those portions of the electronic text. The soundtrack in WO2013/015694 comprises multiple audio regions that are designated to playback during designated text portions of the electronic text. Each audio region comprises audio data defining the audio track to playback, the start position in the electronic text at which the audio region is to commence playback, and a stop position in the electronic text at which the audio region is to cease playback. In one embodiment described, the electronic text is indexed based on the number of words and the start and stop positions of the audio regions relate to a start and stop word.

WO2013/015694 describes a soundtrack creation system that enables a user to manually create a synchronised soundtrack for an item of electronic text. The soundtrack creation system utilizes a graphical user interface (GUI) to display the electronic text to the user and allows the user to create each audio region of the soundtrack by highlighting a desired text region and configuring the audio data properties to define the audio track for playback during the text region and any other desired real-time audio playback effects, such as panning or volume envelopes. This form of manual soundtrack creation requires a creator to read and interpret the text to ascertain significant events and the emotions being conveyed to the reader so as to define the locations (e.g. start and end) of suitable audio regions in the soundtrack timeline, and to then select a suitable audio file for playback at that region. This applies across each type of sound layer, whether sound effects, background music, or ambience. For example, for the background music layer the creator must interpret and identify the emotion or dominant emotion being conveyed in the text, define start and end locations of a music audio region of the music layer for a passage of text having that identified emotion, and then select a suitable music track to enhance or correspond with the emotion conveyed of that text region. The creator must continue this process across the entire text to define the audio regions of the music layer for the soundtrack, which is a time consuming process. A similar process is required for the ambience and sound effect layers, in which audio regions for sound effects and ambience are configured to enhance text regions in the text, i.e. by identifying text regions where enhancing ambience or sound effect audio regions can be created for playback in the soundtrack. The creator must create and configure these audio regions across the multiple layers across the entire text, which is a time consuming process. The soundtrack creation process is also subjective, and therefore the soundtrack quality may vary depending on the creator and/or their interpretation of the text.

In this specification where reference has been made to patent specifications, other external documents, or other sources of information, this is generally for the purpose of providing a context for discussing the features of the invention. Unless specifically stated otherwise, reference to such external documents is not to be construed as an admission that such documents, or such sources of information, in any jurisdiction, are prior art, or form part of the common general knowledge in the art.

**SUMMARY OF THE INVENTION**

It is an object of at least some embodiments to provide a system and method for at least partial automatic-creation of synchronised soundtracks for text, or at least provide the public with a useful choice.

It is an object of at least some embodiments to provide a method of delivering a synchronised soundtrack for playback with an associated book, or to at least provide the public with a useful choice.

In a first aspect, the invention broadly consists in a method of automatically generating a digital soundtrack intended for synchronised playback with the reading of an associated text, the soundtrack comprising one or more audio regions configured for playback during corresponding text regions of the text, the method executed by a processing device or devices having associated memory, the method comprising:

(a) receiving or retrieving raw text data representing the text into memory;

(b) applying natural language processing (NLP) to the raw text data to generate processed text data comprising token data that identifies individual tokens in the raw text, the tokens at least identifying distinct words or word concepts;

(c) applying semantic analysis to a series of text segments of the processed text data based on a continuous emotion model defined by a predefined number of emotional category identifiers each representing an emotional category in the model, the semantic analysis being configured to parse the processed text data to generate, for each text segment, a segment emotional data profile based on the continuous emotion model;

(d) identifying a series of text regions comprising a text segment or a plurality of adjacent text segments having an emotional association by processing the segment emotional data profiles of the text segments with respect to predefined rules, and generating audio region data defining the intended audio regions corresponding to the identified text regions, each audio region being defined by a start position indicative of the position in the text at which the audio region is to commence playback, a stop position indicative of the position in the text at which the audio region is to cease playback, and a generated region emotional profile based on the segment emotional profiles of the text segments within its associated text region;

(e) processing an accessible audio database or databases comprising audio data files and associated audio profile information to select an audio data file for playback in each audio region, the selection at least partly based on the audio profile information of the audio data file corresponding to the region emotional profile of the audio region, and defining audio data for each audio region representing the selected audio data file for playback; and

(f) generating soundtrack data representing the created soundtrack for playback, the soundtrack data comprising data representing the generated audio regions and audio data associated with those audio regions.

In one embodiment, the text is from electronic media content, and the raw text data is extracted from a data file or files representing the electronic media content. In another embodiment, the text is printed text, and the step of receiving or retrieving raw text data representing the text into memory comprises converting the printed text into electronic text contained in a data file or files from which the raw text data can be received or retrieved.

In an embodiment, applying natural language processing to the raw text data comprises processing the raw text data into a series of distinct or individual tokens. In one embodiment, the token data comprises tokens representing each word or word concepts from the raw text data, with the tokens arranged or ordered into their respective sentences. In another embodiment, the token data comprises tokens representing each word or word concept or punctuation from the raw text data, with the tokens arranged or ordered into their respective sentences. In another embodiment, the parameters defining the tokenization, i.e. what constitutes a distinct token, may be configured based on tokenization control parameters.

In an embodiment, applying natural language processing to the raw text data further comprises applying syntactic or part of speech (POS) tagging to the raw text data to identify syntactic components in each sentence and the processed text data further comprises syntactic data indicative of the identified syntactic components. In one configuration, each token of the token data is tagged with its identified or associated syntactic component. By way of example, the tokens may be tagged with syntactic data identifying whether they are a verb, noun, adjective, preposition or other syntactic component, or may be tagged with a default 'unknown' tag if the token does not have an identified syntactical component.

In an embodiment, the method further comprises identifying or segmenting the processed text data into the series of text segments prior to or during the semantic analysis.

In an embodiment, segmenting the processed text data into a series of text segments comprises segmenting the text data into text segments representing the individual sentences within the text. In another embodiment, segmenting the processed text data into a series of text segments comprises segmenting the text data into text segments representing a predetermined number of adjacent words or adjacent sentences. In another embodiment, segmenting the processed text data into a series of text segments comprises segmenting the text data into text segments based on text reference points, such as paragraph or page or chapter boundaries or other text reference boundaries. In one example, the text segments may represent individual paragraphs or chapters of the text. It will be appreciated that the length of each text segment (e.g. defined by the number of tokens in the segment) may vary from segment to segment, such that the text segments may be non-uniform in length.

In an embodiment, the continuous emotion model is further defined by lexicon data representing a set of lexicons for the emotional category identifiers. In an embodiment, each lexicon comprises data indicative of a list of words and/or word concepts that are categorised or determined as being associated with the emotional category identifier associated with the lexicon. In one form, the lexicon data may be fixed or static such that the lists of words and/or word concepts in each lexicon are fixed. In an alternative configuration, the lexicon data is dynamic such that it may be modified or updated to thereby selectively modify or adjust their list of words and/or word concepts in each lexicon. In one form, the words and/or word concepts in each lexicon are mutually exclusive such that they do not appear in any other lexicon. In an alternative form, the words and/or word concepts of each lexicon are not mutually exclusive in that they appear in more than one lexicon.

In an embodiment, each word or word concept in each lexicon has one or more associated lexicon attribute values or identifiers. In one configuration, each word or word concept has a weighting value representing how strongly the word or word concept represents the emotional category identifier of the lexicon, and a syntactic value or identifier representing the part of speech or type of word or word concept, such as noun, verb, adjective, adverb, idiom or the like.

In an embodiment, applying semantic analysis to the processed text data comprises generating segment emotional data profiles that represent for each emotional category identifier the absolute count or frequency of tokens in the text segment corresponding to the associated lexicon. In one form, the segment emotional data profile is generated in the form of a multi-dimensional data set or data array comprising a plurality of count or frequency values, one for each emotional category identifier, and wherein the count or frequency values are based on the number of tokens in the text segment corresponding to or matching to their lexicon associated with an emotional category identifier.

In one example embodiment, the continuous emotional model is defined by eight emotional category identifiers, and in this embodiment the sentence emotional data profile is an eight value data set or data array comprising eight count or frequency values, each count or frequency value corresponding to a respective emotional category identifier.

In an embodiment, the multi-dimensional data arrays of the segment emotional data profiles are multi-dimensional representations of the emotional profile of the text segments, each emotional category identifier representing a distinct dimension within the continuous emotion model.

In an embodiment, the generated segment emotional data profiles comprise a multi-dimensional data set comprising absolute count values or frequency values for each emotional category identifier. In one form, the frequency values are segment frequency values representing the absolute count value divided by the total number of tokens in the text segment, and which is expressed as either a percentage or fractional value.

In an embodiment, the absolute count values or frequency values of the multi-dimensional data set represent or are indicative of the absolute intensity of the text segment for each emotional category identifier.

In an embodiment, the method further comprises generating baseline statistical values for each emotional category identifier across the entire text, and normalising or scaling the segment emotional data profiles based on or as a function of the generated baseline statistical values to generate relative segment emotional data profiles.

In an embodiment, the relative segment emotional data profiles comprise a multi-dimensional data set of relative count values or frequency values that are generated by normalising of scaling the absolute count values or frequency values based on the baseline statistical values. In this embodiment, the relative count values or frequency values of the multi-dimensional data set represent or are indicative of the relative intensity of the text segment for each emotional category identifier based on the baseline statistical values for the entire text.

In one example, the method comprises calculating baseline statistical values for the entire text that represent the mean absolute count value per text segment per emotional category identifier and an associated count value standard deviation value per emotional category identifier, and generating relative segment emotional data profiles based on the calculated mean absolute counter values and/or associated standard deviation values per emotional category identifier. In one form, the relative segment emotional data profile comprises a multi-dimensional data set comprising relative count values that represent the absolute count value as a function of the number of standard deviations it is from the mean.

In another example, the method comprises calculating baseline statistical values for the entire text that represent the global frequency values per emotional category identifier and associated segment frequency value standard deviation per emotional category identifier calculated based on the global frequency values, or calculating mean segment frequency values per emotional category identifier and associated segment frequency standard deviation values per emotional category identifier calculated based on the mean segment frequency values; and generating relative segment emotional data profiles based on the calculated global frequency values and/or associated standard deviation values per emotional category identifier, or based on the mean segment frequency values and/or associated segment frequency standard deviation values per emotional category identifier. In one form, the relative segment emotional data profile comprises a multi-dimensional data set comprising relative frequency values that represent the absolute frequency value as a function of the number of standard deviations it is from the global frequency value or mean segment frequency value.

In an embodiment, the continuous emotion model comprises a 2-dimensional circular reference frame defined by a circular perimeter or boundary extending about a central origin, with each emotional category identifier represented by a segment or spoke of the circular reference frame to create a continuum of emotions. In one configuration, the segments are equal in size or the reference spokes are equi-spaced about the circular reference frame.

In an embodiment, the 2-dimensional circular reference frame comprises a set of orthogonal reference axes extending from the origin, one axis representing 'arousal' from activated or high arousal at one extreme at one point on the circular perimeter of the model to deactivated or low arousal at the other extreme on a diametrically opposed point on the circular perimeter of the model, and the other axis representing 'pleasantness' from pleasant at one extreme at one point on the circular perimeter of the model to unpleasant at the other extreme on a diametrically opposed point on the circular perimeter of the model.

In one configuration, the arousal axis is configured to divide the circular model into two 'arousal' halves, one representing emotions of activation and the other representing emotions of deactivation, and the pleasantness axis is configured to divide the circular model into two 'pleasantness' halves, one representing pleasant emotions and the other representing unpleasant emotions, the pleasantness halves being at an orthogonal orientation with respect to the arousal halves.

In an embodiment, the segments or spokes of emotional category identifiers are arranged about the circular reference frame according to their position or association with the arousal and pleasantness axes.

In one embodiment, the continuous emotion model comprises eight emotional category identifiers, each representing a spoke or an octant of the 2-dimensional circular reference frame.

In one embodiment, the method comprises mapping or casting the absolute or relative sentence emotional data profiles into the 2-dimensional circular reference frame.

In an embodiment, the method further comprises calculating or determining a sentiment value for each of the text segments. In one configuration, the sentiment value is a value representing or indicative of whether the text segment represents a positive or negative sentiment. In one configuration, the sentiment value represents whether the text segment is positive or negative, and/or the intensity of that sentiment relative to a scale. In one example, the sentiment value is a numerical value on a scale from a first threshold (e.g. -1.0) representing a very negative sentiment to a second threshold (e.g. +1.0) representing very positive sentiment. The sentiment value may be generated by any suitable sentiment analysis tool or engine. Examples of such sentiment analysis tools or engines include, but are not limited to, VADER (Valence Aware Dictionary and sEntiment Reasoner), Apache UIMA (part of OpenNLP), Weka, and Python NLTK (NLP toolkit).

In one configuration, the segment emotional data profiles are multi-dimensional data sets comprising absolute or relative intensity values for each emotional category identifier, and the method comprises mapping each data set as multiple two-dimensional vectors into the circular reference frame, a vector representing the intensity value of each emotional category identifier of a text segment. In one example, the method comprises mapping each intensity value of a segment emotional data profile as a distinct vector extending from the origin of the circular reference frame, the angular position of the vector aligning to the segment or spoke of its corresponding emotional category identifier and the length of the vector or distance from the origin relative to the circular perimeter of the model being a function of its intensity value.

In another configuration, the segment emotional data profiles are multi-dimensional data sets comprising absolute or relative intensity values for each emotional category identifier, and the method comprises mapping each data set as a single representative or resultant two-dimensional vector into the circular reference frame, the vector representing the overall emotional profile and intensity of the text segment. In one example, the method comprises calculating a resultant vector from the summation of the multiple two-dimensional vectors representing a segment emotional data profile or calculating a resultant vector for the segment emotional data profile based on the absolute or relative intensity values for each emotional category identifier and data indicative of the associated angular position of each segment or spoke in the circular reference frame representing the emotional category identifiers. In an embodiment, calculating a resultant vector for a text segment from its multi-dimensional data set is further based on a sentiment value generated or determined for the text segment.

In one embodiment, identifying text regions comprises identifying reference text segments that represent emotional transitions in text based on predefined emotional-change threshold or thresholds, and defining the text regions relative to those reference text segments.

In another embodiment, identifying text regions comprises defining all text segments as an initial set of text regions, and iteratively grouping adjacent text segments into a set of larger final text regions based on analysis of the segment emotional data profiles and/or other predefined rules.

In an embodiment, the predefined rules include configurable minimum and/or maximum threshold values defining the minimum and/or maximum length of the final text regions. In an embodiment, the minimum and/or maximum threshold values may be in the form of token or word counts. In another embodiment, the minimum and/or maximum threshold values may be token or word count values derived from or which are a function of the minimum and/or maximum playback time periods defined for the audio regions and a reading speed variable indicative of the average or nominal reading speed of an end user or a customised reading speed variable indicative of the reading speed of a particular end user. In such embodiments, the minimum and/or maximum threshold values are configurable to control the general frequency of audio regions and the associated frequency of the change in audio or music over the duration of the soundtrack.

In another embodiment, identifying text regions comprises:

(i) defining a first set of text regions of one or multiple adjacent text segments by grouping text segments with neutral segment emotional data profiles with adjacent non-neutral segment emotional data profiles;

(ii) reducing the first set of text regions into a smaller second set of text regions based on grouping at least some adjacent text regions from the first set into larger text regions until all the text regions in the second set reach a predetermined size threshold;

(iii) generating or determining an interim text region emotional data profile for each of the larger text regions in the second set based on the individual segment emotional data profiles of the segments within the region;

(iv) analysing the interim text region emotional data profiles of the second set of text regions and further grouping adjacent text regions having an emotional association based on an emotional-transition threshold or thresholds to generate a final set of text regions; and

(v) generating or determining a text region emotional data profile for each of the text regions in the final set based on the individual segment emotional data profiles of the text segments within the region and/or the interim text region emotional data profiles.

In an embodiment, a neutral segment emotional data profile is determined based on a neutral segment threshold that is indicative of minimal or neutral emotion being present in the text segment. In one example, a text segment may be considered to have a neutral text segment emotional data profile if its absolute or relative intensity values across all emotional category identifiers are below respective absolute or relative intensity thresholds, such as zero.

In an embodiment, the size threshold may be a token count threshold or value representing a minimum number of tokens required to be a text region candidate. In another embodiment, the size threshold may be a word count threshold or value representing a minimum number of words required to be a text region candidate.

In an embodiment, the interim text region emotional data profiles are in the same format as the segment emotional data profiles. For example, the interim text region emotional data profiles may be in the form of multi-dimensional data sets comprising absolute or relative intensity values for each emotional category identifier.

In one configuration, generating or determining an interim text region emotional data profile for each of the text regions in the second set comprises electing the segment emotion data profile of the single text segment as the interim text region emotional data profile if the text region only contains a single text segment.

In another configuration, generating or determining an interim text region emotional data profile for each of the text regions in the second set comprises generating an interim text region emotional data profile that is based on averaging the segment emotional data profiles of all text segments in the text region.

In another configuration, generating or determining an interim text region emotional data profile for each of the text regions in the second set comprises selecting the prevailing or dominant segment emotional data profile of the text segments within the text region to represent the interim text region emotional data profile.

In another configuration, generating or determining an interim text region emotional data profile for each of the text regions in the second set comprises generating a representative interim text region emotional data profile based on statistical processing of the segment emotional data profiles of the text segments within the text region.

In another configuration, generating or determining an interim text region emotional data profile for each of the text regions in the second set comprises combining or summing all the segment emotional data profiles of all the text segments in a text region to generate a single interim text region emotional data profile. In one example, the interim text region emotional data profile may be in the form of a multi-dimensional data set comprising absolute or relative intensity values for each emotional category identifier that are calculated from summing the respective intensity values of each emotional category identifier from all of the multi-dimensional segment emotional data profiles in the text region.

In an embodiment, the interim text region emotional data profile is further processed by applying a masking or weighting function to generate a masked interim text region emotional data profile for the text region. By way of example, the masking or weighting function may be configured to determine the highest aggregated sub-set of adjacent intensity values in the multi-dimensional data set to represent the masked interim text region emotional data profile. The sub-set may be determined from a preconfigured number of emotional category identifiers. In one example, for an 8-dimensional data set, the highest aggregated 2 or 3 adjacent intensity values are selected to represent the masked data profile, with the remaining intensity values in the interim data profile being zeroed. In another example, the highest intensity value may be selected to represent the masked date profile, with the remaining intensity values in the interim data profile being zeroed.

In an embodiment, analysing the interim text region emotional data profiles of the second set of text regions and further grouping adjacent text regions having an emotional association based on an emotional-transition threshold to generate a final set of text regions comprises:

(i) mapping each interim text region emotional data profile or masked interim text region emotional data profile as a two-dimensional vector into the 2-dimensional circular reference frame of the continuous emotion model;

(ii) identifying emotional transitions between adjacent interim text regions based on analysing or comparing the distance from the origin and/or angular movement between two-dimensional vectors of adjacent interim text regions relative to emotional-transition thresholds; and

(iii) grouping of adjacent interim text regions based on the identified emotional transitions to generate a final set of text regions.

In an embodiment, the emotional transition thresholds are based on vector movement or distance thresholds. In one configuration, the emotional-transition threshold is based on the change in emotional intensity between adjacent two-dimensional vectors represented by the distance of the vectors from the origin. In another configuration, the emotional-transition threshold is based on the change in emotion between adjacent two-dimensional vectors represented by the change in angle or direction of the vectors within the circular reference frame. In another configuration, the emotional-transition threshold is based on a function of the change in emotional intensity and/or change in emotion in accordance with the change in distance and/or angle or direction of the vectors from adjacent interim text regions. In one form, the function may dictate a higher weighting on distance change relative to direction change, or vice versa.

In an embodiment, the analysis of interim text region emotional data profiles commences progressively from the start of the text onwards and iteratively accumulates interim text regions having an emotional association until an emotional transition is identified, and the preceding interim text regions before the emotional transition are grouped as a final text region for the set of final text regions, and then analysis then repeats through the remaining interim text regions to determine all final text regions.

In one embodiment, generating or determining a text region emotional data profile for each of the text regions in the final set comprises any one or more of the following:

- aggregating or summing the individual segment emotional data profiles of the text segments of the text region or combining or summing the individual interim text region emotional data profiles of the text region,
- selecting a prevailing or dominant segment emotional data profile or interim text region emotional data profile to represent the final text region, or
- generating a representative text region emotional data profile based on statistical processing of the segment emotional data profiles or interim text region emotional data profiles.

In an embodiment, identifying text regions further comprises adjusting the start and/or end of one or more of the text regions in the final set to align with predetermined reference points within the text and according to predetermined alignment rules. In one example, the predetermined reference points may comprise data indicative of paragraph or chapter boundaries, and the start and/or end of one or more of the text regions may be adjusted to align with the closest paragraph or chapter boundary based on predetermined alignment rules. In one configuration, the re-alignment of the start and/or end of the text regions may comprise re-allocating one or more sentences of the text region to an adjacent text region or obtaining one or more sentences into the text region from an adjacent text region.

In one embodiment, the step of processing an accessible audio database or databases comprising audio data files and associated audio profile information to select an audio data file for playback in each audio region comprises translating the region emotional profiles of the text regions into a format or data set that is comparable to the audio profile information of the audio data files in the audio database or databases. In another embodiment, the method comprises translating the audio profile information of the audio data files is into a format or data set that is comparable to the region emotional profiles. In another embodiment, the method comprises translating both the region emotional profiles and audio profile information into a common format or data set so they can be compared for a match. In another embodiment, the method comprises processing an accessible audio database comprising audio data files having associated audio profile information that is in the same format or is at least partly directly comparable to the format of the region emotional profiles. In one such embodiment, the audio data files of the audio database comprise audio profile information that comprises an emotional data profile determined and/or defined according to or based on the continuous emotional model.

In an embodiment, the method further comprises selecting an audio data file from the database for an audio region based on one or more configurable music-selection filters. By way of example, the music-selection filters may comprise any one or more of the following:

- genre music-selection filters
- style music-selection filters
- text-based music-selection filters
- user-based music-selection filters
- musical-characteristic music-selection filters
- playlist music-selection filters
- rating or machine-learning music-selection filters

In an embodiment, the audio database comprises audio data files having associated emotional data profiles that are generated based on a profiling tool that is configured to receive one or more profile dots selected in a graphical user interface displaying a graphical representation of the continuous emotion model by a listener of the audio file.

In an embodiment, the method further comprises applying semantic analysis to the processed text and/or identified text regions based on one or more thematic category identifiers to generate segment thematic profiles for the text segments and/or region thematic profiles for the identified text regions. In this embodiment, the semantic processing may be based on thematic lexicons representing each of the thematic category identifiers.

In an embodiment, the method comprises generating, for each text segment, a segment emotional and thematic data profile based on the continuous emotion model and the one or more thematic category identifiers.

In an embodiment, the method comprises identifying a series of text regions each comprising a text segment or plurality of text segments having an emotional association and/or thematic association based on processing the segment emotional and thematic data profiles with respect to predefined rules.

In an embodiment, the method comprises generating, for each identified text region, a region emotional and thematic data profile based on the emotional and thematic profiles of the text segments within the text region.

In an embodiment, the method further comprises processing the identified text regions to generate a thematic data profile for each region based on one or more thematic category identifiers, and generating a region emotional and thematic data profile for each text region and its associated audio region.

In an embodiment, the method comprises processing the accessible audio database or databases to select an audio data file for playback in each audio region based at least partly on the audio profile information of an audio data file corresponding or matching closely to the region emotional and thematic profile of the audio region.

In an embodiment, the method comprises generating further audio data for each audio region defining any one or more of the following additional audio playback effects or settings:

- transitional playback effects between audio regions based on configurable predefined rules such as, but not limited to cross-fade, fade-in, and/or fade-out effects for the playback of the audio data file in each audio region, and/or
- looping settings to define how the audio data file should loop should its duration be shorter than the playback duration of its associated audio region during playback,
- offset start and/or stop settings that are configured to start and/or stop playback of an audio file (e.g. music file) for an audio region at offset playback time positions within the audio file relative to the start and/or end times that define the conventional playback duration of a music file. For example, the settings may be configured to initiate playback of the music file from 30 seconds into the audio track playback, and/or cease 30 seconds before the natural end point in the playback of the audio track. In some embodiments, the offset start and/or stop time settings may be configured to be selectively ignored or enforced, depending on the playback device, the particular music track, the particular source of the audio or music (e.g. streaming music service), profile or subscription status of end user, and/or or territory in which the soundtrack is played.

In an embodiment, the start and stop positions are indicative of a word in the text at which the audio region is to commence and cease playback respectively. For example, each audio region may be defined by a start text position indicative of the word in the text at which the audio region is to commence playback, and a stop text position indicative of the word in the text at which the audio region is to cease playback.

In one embodiment, the soundtrack comprises a soundtrack timeline along which the one or more audio regions are configured for synchronised playback with corresponding text regions in the text as it is being read, each audio region having a position along the soundtrack timeline that is dynamically adjustable to maintain synchronization of the audio regions of the soundtrack with their respective text regions in the text as they are being read based on a reading speed variable indicative of the reader's reading speed and/or a reading position variable indicative of the reader's reading position in the text.

In one embodiment, the start and stop positions defining each audio region correspond to start and stop text positions comprising data indicative of a position or location in the text such as, but not limited to, an index value, word count value, character count value, page number, chapter number, paragraph number, positional reference scheme identifier (e.g. CFI), or the like.

In another embodiment, the start and stop positions defining each audio region correspond to start and stop playback time values that correspond to the estimated time at which a user will read the corresponding start and stop positions in the text (e.g. start and stop words defining the start and end of an audio region). The timeline for the time values may be based on a nominal or average reading speed, and then the time values may be adjusted based on the end user's specific reading speed.

In an embodiment, the method comprises generating a soundtrack data file or files comprising the data indicative of the generated audio regions comprising the start text position and stop text position, and audio data representing the audio file or files selected for playback in each audio region and any associated configured audio playback effect data for the audio region. In an embodiment, the soundtrack data file further comprises data representing the region emotional profile generated for each audio region.

In an embodiment, the audio data may comprise the audio files or links or file path information to the audio files.

In an embodiment, the audio regions of the soundtrack are music regions intended to play background music. In one embodiment, the soundtrack comprises a single layer or type of music audio regions configured for continuous playback such that each audio region plays sequentially, and optionally comprises transitional playback effects between adjacent audio regions such as cross-fades and/or fade-in/out effects. In another embodiment, the soundtrack comprises a plurality of layers of different types of audio regions, at least one of which is a music layer of music audio regions and the method is applied to generate the music audio regions.

In one embodiment, the method may be applied to the entire text to generate a soundtrack of a series of music regions for the entire text. In another embodiment, the method may be applied to a portion or portions of an entire text, to create soundtrack or music regions specifically for one or more desired portions of the text.

In one embodiment, the soundtrack may be continuous or substantially continuous with no or minimal playback gap between adjacent audio music regions. In alternative embodiments, the soundtrack may be configured with muted portions or gaps between adjacent audio music regions, for example based on predetermined rules.

In an embodiment, the soundtrack comprises a single layer of music audio regions configured for continuous playback such that each audio region transitions to the next audio region taking into account musical key or tonality changes that are harmonically compatible among each other.

In an embodiment, the method may be configured to generate pre-rendered soundtracks ready for playback. In another embodiment, the method may be configured to operate on demand to generate soundtracks for text in real-time.

In an embodiment, the method may be operable to generate a soundtrack for text of any nature, whether books, publications, articles, professional documents, marketing materials, internet literature or websites, or the like.

In a second aspect, the invention broadly consists in a method of automatically generating a digital soundtrack intended for synchronised playback with the reading of an associated text, the method executed by a processing device or devices having associated memory, the method comprising:

> syntactically and/or semantically analysing the text at a text segment level to generate an emotional profile for each text segment in the context of a continuous emotion model; and
> generating a soundtrack for the text comprising one or more audio regions that are configured or selected for playback during corresponding text regions of the text, and wherein the audio configured for playback in the audio regions is based on or a function of the emotional profile of one or more of the text segments within the respective text regions.

In a third aspect, the invention broadly consists in a method of automatically generating a digital soundtrack intended for synchronised playback with the reading of an associated text, the method executed by a processing device or devices having associated memory, the method comprising:

> syntactically and/or semantically analysing the text at a text segment level to generate an emotional profile for each text segment at least partly based on scanning the word or word concepts in the text segment relative to a predefined number of emotional category lexicons;
> analysing the emotional profiles of the text segments to group those having an emotional association into larger text regions of multiple adjacent text segments; and
> generating a soundtrack for the text comprising audio regions that are configured for playback during the corresponding text regions of the text, and wherein the audio configured or selected for playback in the audio regions is based on or is a function of the emotional profiles of the group of text segments within the respective associated text regions.

In a fourth aspect, the invention broadly consists in a method of automatically generating a digital soundtrack intended for synchronised playback with the reading of an associated text, the method executed by a processing device or devices having associated memory, the method comprising:

> identifying emotional-transition points in the text based on syntactically and/or semantically analysing the text in the context of a continuous emotion model;
> defining a series of audio regions for the soundtrack based on the identified emotional-transition points, each audio region corresponding to an associated text region in the text;
> selecting an audio file or files for playback in each audio region based on an emotional profile determined for its associated text region; and
> generating a soundtrack for the text based on the configured audio regions and selected audio files.

In a fifth aspect, the present invention broadly consists in a method of automatically generating a text emotional profile map for text, the method executed by a processing device or devices having associated memory, the method comprising:

(a) receiving or retrieving raw text data representing the text into memory;
(b) applying natural language processing (NLP) to the raw text data to generate processed text data comprising token data that identifies individual tokens in the raw text, the tokens at least identifying distinct words or word concepts;
(c) applying semantic analysis to the processed text data based on a continuous emotion model defined by a predefined number of emotional category identifiers each representing an emotional category in the model, the semantic analysis being configured to parse the processed text data to generate, for each text segment, a segment emotional data profile based on the continuous emotion model; and
(d) generating a text emotional profile map of the text based on and/or comprising the segment emotional data profiles of the text segments.

In an embodiment, the method further comprises identifying or segmenting the processed text data into the series of text segments prior to or during the semantic analysis.
In one embodiment, the method further comprises processing the emotional data profiles of the text segments to identify emotion-transition points in the text and generating representative data for the text emotional profile map.
In one embodiment, the method further comprises identifying a series of text regions comprising a text segment or multiple adjacent text segments having an emotional association by processing the segment emotional data profiles of the text segments with respect to predefined rules, and generating representative data for the text emotional profile map.
In a sixth aspect, the invention broadly consists in a method of generating a digital soundtrack intended for synchronised playback with the reading of an associated text, the soundtrack comprising one or more audio regions configured for playback during corresponding text regions of the text, the method executed by a processing device or devices having associated memory, the method comprising:

receiving or retrieving a text emotional profile map of the text generated according to the fifth aspect of the invention;
processing the text emotional profile map to identify a series of text regions comprising a text segment or a plurality of adjacent text segments;
generating audio region data defining the intended audio regions corresponding to the identified text regions, each audio region being defined by a start position indicative of the position in the text at which the audio region is to commence playback, a stop position indicative of the position in the text at which the audio region is to cease playback, and a generated region emotional profile based on the segment emotional profiles of the text segments within its associated text region;
processing an accessible audio database or databases comprising audio data files and associated audio profile information to select an audio data file for playback in each audio region, the selection at least partly based on the audio profile information of the audio data file corresponding to the region emotional profile of the audio region, and defining audio data for each audio region representing the selected audio data file for playback; and
generating soundtrack data representing the created soundtrack for playback, the soundtrack data comprising data representing the generated audio regions and audio data associated with those audio regions.

The second-sixth aspects of the invention may comprises any one or more of the features mentioned in respect of the first aspect of the invention.
In a seventh aspect, the invention broadly consists in a method of delivering a synchronised soundtrack for playback with an associated book, the method comprising:

receiving input data indicative of or identifying a book a user is reading;
retrieving or generating a soundtrack for the book the user is reading based on the input data; and
delivering or playing the soundtrack to the user for playback.

In an embodiment, the method is implemented by a processing device or devices having associated memory.
In one configuration, the input data indicative of or identifying the book the user is reading is received via a user operable graphical user interface. In another configuration, the input data indicative of or identifying the book the user is reading is received via voice commands processed by a device such as an AI assistant or device. In another configuration, the input data indicative of or identifying the book is in the form of a scanned machine-readable code (e.g. barcode or QR code) associated with or printed on the book. In another configuration, the input data indicative of or identifying the book is a digital image (e.g. photo) captured of the cover or other portion of the book, and wherein the digital image is image processed to identify the book.

In one embodiment, the book may be a printed book. In another embodiment, the book may be an electronic book, e.g. an e-book.

In an embodiment, the method comprises retrieving a pre-rendered soundtrack for the book from a database. In one configuration, the pre-rendered soundtrack is automatically generated or created by any of the previous aspects of the invention above.

In an embodiment, the method comprises automatically generating a soundtrack for the book in real-time using any of the previous aspects of the invention above. In some configurations, the method comprises retrieving previously prepared text emotional profile map data and/or audio definition data generated for the book.

In an embodiment, the method comprises retrieving electronic text from one or more text sources that corresponds to the book the user is reading based on the input data, and automatically generating a soundtrack for the book in real-time using any of the previous aspects of the invention above.

In an embodiment, the method further comprises receiving arbitrary or periodic reading position input data relating to the reading position of the user in their book. In one configuration, the reading position data is provided via an operable graphical user interface (e.g. user inputting data indicative of the page or chapter they are reading). In another configuration, the reading position data is received via voice commands processed by a device such as an AI assistant or device.

In an embodiment, the method comprises controlling the playback position of the soundtrack based on the reading position data.

In an embodiment, the method comprises controlling the playback of the soundtrack based on audio playback control input received via user operation of the operable graphical user interface or voice commands.

In an embodiment, the playback of the soundtrack is synchronised to the user's reading position in the book based on the reading position data and/or a reading speed variable indicative of the reading speed of the user. The reading speed variable may be manually selected or entered or determined from a reading speed test, or may be automatically calculated based on the elapsed time between arbitrary or periodic reading position input data updates.

In one configuration, the method is implemented by a system comprising: a first electronic user device or a first application program configured to receiving input data indicative of or identifying a book a user is reading;

a remote server that is configured to retrieve or generate a soundtrack for the book the user is reading based on the input data and deliver it for playback; and

the first electronic user device or first application program or a second electronic user device or a second application program being configured to receive the delivered soundtrack from the remote server for playback to the user.

In an embodiment, the first and second electronic user devices or first and second application programs are in data communication with the remote server and optionally also with each other. In some embodiments, the data communication between the user devices or applications programs and the remote server is over the internet or other data network.

The seventh aspect may have any one or more features mentioned in respect of the first-sixth aspects of the invention.

In an eighth aspect, the invention broadly consists in a system comprising a processor or processors configured to implement any one or more of the methods of the aspects of the invention above.

In a ninth aspect, the invention broadly consists in a non-transitory computer-readable medium having stored thereon computer readable instructions that, when executed on a processing device or devices, cause the processing device to perform any one or more of the methods of the aspects of the invention above.

In a tenth aspect, the invention broadly consists in a soundtrack or soundtrack data generated by the method of any one or more of the previous aspects of the invention.

The eighth-tenth aspects of the invention may have any one or more of the features mentioned in respect of the first-seventh aspects of the invention.

### *Definitions*

The term "token" as used in this specification and claims is intended to mean, unless the context suggests otherwise, a configurable or definable single text element concept or set of text element concepts such as, but not limited to, a word, a word concept represented typically by two or three adjacent words (e.g. 'car park' is a two word concept representing a token), and/or punctuation.

The term "soundtrack" as used in this specification and claims is intended to mean, unless the context suggests otherwise, a soundtrack configured or intended for synchronised playback while reading text, including by way of example only, but not limited to, the type described in WO2013/015694 which comprises multiple audio regions that are configured for playback at predetermined reading positions or regions within the electronic media content, and where the playback timing of the soundtrack is synchronized with the user based on estimated or data indicative of their reading position and/or reading speed.

The phrases "hardware system" or "electronic user device" as used in this specification and claims is intended to mean, unless the context suggests otherwise, any form of computing, processing or programmable electronic device, platform or system typically including a processor and memory and including, but not limited to, portable or non-portable consumer electronic devices such as smart phones, cell phones, tablets, smart watches, e-Reader or e-book devices, laptops, and notebooks, gaming machines or consoles, server, smart televisions, Artificial Intelligence (AI) assistant devices or AI computers, general purpose computers such as desktop computers, specific purpose computers, wearable computers or computing devices such as head-mounted displays or eyewear or contact lens or the like, and is intended to include one or more linked or communicating hardware or processing devices or systems which work together.

The phrases "text position" or "reading position identifier" as used in this specification and claims, unless the context suggests otherwise, is intended to refer to a position or location within the text such as typically a line or word or character of the electronic text or any other arbitrary selected position with the electronic text, and the position may be referenced or identified in any suitable manner appropriate to the text (whether printed or electronic), whether indirectly or directly, including but not limited to: an index value, numeric or otherwise, corresponding to the index position of a word or character in the text for text that has been indexed, including a word number, or character number for example; or any other positional reference scheme for identifying locations within electronic text such as text position coordinates, Canonical Fragment Identifier (CFI) values in the context of ePub or other electronic documents or content, or any other text positional reference scheme.

The term "network" as used in this specification and claims is intended to mean, unless the context suggests otherwise, any data network or data communication channel or combination of networks or channels over which a user device may send and/or receive data to another device, whether a remote server or servers or other user devices, including, but not limited to, the internet, an intranet or extranet, a Local Area Network (LAN), and/or a Wireless Local Area Network (WLAN), whether accessed over a wired or wireless medium or a combination of these.

The phrase "electronic media content" as used in this specification and claims is intended to mean, unless the context suggests otherwise, any electronic media content comprising electronic text, whether alone or in combination with static or animated imagery or graphics, the electronic media content being in any format or file-type capable of being rendered on an electronic display, and including, but not limited to, an electronic book or e-book, a webpage, digital video, or slide show presentation.

The term "comprising" as used in this specification and claims means "consisting at least in part of'. When interpreting each statement in this specification and claims that includes the term "comprising", features other than that or those prefaced by the term may also be present. Related terms such as "comprise" and "comprises" are to be interpreted in the same manner.

As used herein the term "and/or" means "and" or "or", or both.

As used herein "(s)" following a noun means the plural and/or singular forms of the noun.

The invention consists in the foregoing and also envisages constructions of which the following gives examples only.

In the following description, specific details are given to provide a thorough understanding of the embodiments. However, it will be understood by one of ordinary skill in the art that the embodiments may be practiced without these specific details. For example, software modules, functions, circuits, etc., may be shown in block diagrams in order not to obscure the embodiments in unnecessary detail. In other instances, well-known modules, structures and techniques may not be shown in detail in order not to obscure the embodiments.

Also, it is noted that the embodiments may be described as a process that is depicted as a flowchart, a flow diagram, a structure diagram, or a block diagram. Although a flowchart may describe the operations as a sequential process, many of the operations can be performed in parallel or concurrently. In addition, the order of the operations may be rearranged. A process is terminated when its operations are completed. A process may correspond to a method, a function, a procedure, a subroutine, a subprogram, etc., in a computer program. When a process corresponds to a function, its termination corresponds to a return of the function to the calling function or a main function.

## BRIEF DESCRIPTION OF THE DRAWINGS

Embodiments of the invention will be described by way of example only and with reference to the drawings, in which:

**Figure 1** is a schematic illustration of a portion of text and the associated audio regions of a soundtrack synchronised for playback during the reading of the electronic text;
**Figure 2** is a schematic illustration similar to Figure 1 except showing a soundtrack of the invention configured for electronic media content comprising text and images;

**Figure 3** is a schematic diagram of a hardware system for implementing the automatic soundtrack creation system in accordance with an embodiment;

**Figure 4** is a schematic diagram showing the main modules of the automatic soundtrack creation system in accordance with an embodiment;

**Figure 5** is a schematic diagram showing the input and output of the natural language processing engine of the automatic soundtrack creation system in accordance with an embodiment;

**Figure 6** is a schematic diagram of a continuous emotional model used within the semantic analysis engine of the automatic soundtrack creation system in accordance with an embodiment;

**Figure 7A** is a screenshot depicting a set of lexicon text data files associated with the continuous emotional model of the semantic analysis engine;

**Figure 7B** is a screenshot depicting a portion of the list of words of one of the lexicon text data files of Figure 7A in accordance with an embodiment;

**Figure 8** is a schematic diagram showing the input and output of the semantic analysis engine of the automatic soundtrack creation system in accordance with an embodiment;

**Figure 9A** is a schematic diagram depicting the individual intensity vectors for an example multi-dimensional data set representing the emotional profile for a sentence cast into the 2-dimensional emotion model of Figure 6 in accordance with an embodiment;

**Figure 9B** is a schematic diagram depicting a resultant vector representing the overall emotional profile of the sentence of Figure 9B cast into the 2-dimensional emotion model of Figure 6 in accordance with an embodiment;

**Figure 10** is a schematic diagram showing the input and output of the audio region definition engine of the soundtrack creation system in accordance with an embodiment;

**Figure 11** is a flow diagram of the audio region definition algorithm implemented by the audio region definition engine in accordance with an embodiment;

**Figure 12** is a schematic diagram demonstrating an example of the iterative grouping of sentences into larger text regions as implemented by the audio region definition algorithm in accordance with an embodiment;

**Figure 13** is a schematic diagram showing the resultant vectors representing the interim emotional profiles of the text regions generated during the audio region definition algorithm being cast into the 2-dimensional emotion model of Figure 6 in accordance with an embodiment;

**Figure 14** is a schematic diagram showing the input and output of the music matching engine and soundtrack generation engine in accordance with an embodiment;

**Figure 15** is a schematic diagram showing the casting of the emotional profile of an audio region along with the casting of multiple candidate music files into the 2-dimensional emotion model of Figure 6 in accordance with an embodiment;

**Figure 16A** is a schematic diagram of an electronic profiling system for profiling music or audio files in a database according to the continuous emotion model in accordance with an embodiment;

**Figure 16 B** is a screen shot showing the graphical user interface of a the electronic profiling system of Figure 16A in accordance with an embodiment; and

**Figures 17A-17C** depict the profile or meta-data characteristics of genre, style and emotion respectively into which music files of an audio database are profiled into in accordance with an embodiment.

## DETAILED DESCRIPTION OF PREFERRED EMBODIMENTS

### 1. Overview of synchronised soundtracks

The automatic creation systems and methods of this invention may be utilised to create or at least partially create a soundtrack for a user to play and listen to while reading an associated text, whether electronic text displayed on a display device or printed text, such as a paperback book. The soundtrack may be a single layer of music audio or files configured to playback while the user reads the text, or a multi-layered soundtrack of different types of sound layers such as, but not limited to, a music layer, ambience layer, sound effects layer, voice or narration layer or the like. In a multi-layered soundtrack, the sound layers playback concurrently. The playback of the audio files defined by the soundtrack is triggered to synchronise with events and/or emotions being conveyed in the text to enhance the reading experience. The automatic creation systems and methods is primarily configured to create a soundtrack of music audio regions or the music layer of a multi-layered soundtrack.

By way of example only, the automatic creation systems and methods of this invention may be applied to a multi-layered soundtrack of the type described in WO2013/015694 referred to above. The following paragraphs describe the configuration and playback of such multi-layered soundtracks to provide context for the description of the automatic creation systems and methods. It will be appreciated that the automatic creation system and methods are not limited in their application to such soundtracks, and could be applied to other soundtracks, whether single or multi-layered, and regardless of how the playback of the soundtrack is triggered or synchronised with the user's reading of the text, whether electronic text or printed text.

*Multi-layered soundtrack example*

The multi-layered soundtracks of WO2013/015694 may be applied to electronic text in any format or file-type, including but not limited to those associated with the following file extensions: aeh, djvu, epub, fb2, html, xhtml, azw, lit, prc, mobi, exe, pdb, txt, pdb, pdf, ps, rgo, pdb, tr2, tr3, wol, rtf, doc, docx, asc, lit, wri, odt, text, pwi, rtx, sdw, strings, utf8, utf16, wp*, wpw, wri, wtx, asc, csv, lwp, dtp, indd, pmd, ppp, pub, fm, and any type of mark-up language types, including but not limited to SGML, HTML, XHTML, HTML5, XML, and LaTex. The electronic text may be in the form of any electronic media content whether comprising text only or text in combination with imagery or graphics, whether static or moving (e.g. video or other animations). By way of example, but not limited to, the electronic media content may be in the form of an e-book, a webpage, comic or any other electronic media content format.

The soundtrack is customised to the electronic media content and in particular customized to the content of the electronic text to enhance the reading experience for a reader of the electronic text. The soundtrack may comprise audio tracks of different types and may be configured to play concurrently, sequentially, or both while the user is reading the electronic text. Playback of the soundtrack is synchronized with the reading speed (e.g. words per minute or scrolling speed or some other metric) of the user. In one example, the electronic text may be a fiction or non-fiction book, and the soundtrack may comprise a combination of different audio types, including ambient noise, sound effects, and background music that may be configured to play back at a specific point or over specific portions of the electronic text in a synchronized manner as the user is reading those portions of the electronic text.

The soundtrack comprises multiple audio regions that are designated to playback during designated text portions of the electronic text. Each audio region comprises audio data defining the audio track to playback and audio properties defining the desired nature of the playback. The audio data specifies a start text position in the electronic text at which the audio region is to commence playback and a stop text position at which the audio region is to cease playback. In one embodiment, the electronic text is designated a numerical text index based on the number or words or characters in the electronic text, and the start and stop text positions are defined by corresponding start and stop index values respectively. In one example, the indexing of the text is based on the number of words in the electronic text such that each word has a unique index value representing its position in the electronic text. The index values for each word may correspond to their word number or word count in the electronic text. In this example, the audio regions playback between start and stop index values representing the selected start and stop words in the electronic text for that audio region.

When the user is reading the electronic text, a reading position counter or identifier is maintained which corresponds to text position in the electronic text at which the user is estimated as currently reading. The reading position counter increments or changes at a rate at least partially based on the user's reading speed. This reading position counter allows the playback of the audio regions of the soundtrack to be synchronized with the user's reading speed such that playback of an audio region is triggered when the reading position counter matches the start index value of the start word for the audio region, and likewise ceases when the reading position counter matches the stop index value of the stop word of the audio region.

In alternative embodiments, other reading position referencing scheme may be employed in contrast to word or character based indexing. In other embodiments, the start and stop positions of each audio region may be defined by any other document or text position referencing scheme or system. One such example is the ePub canonical fragment identifier (CFI). In such an example, the start and stop positions in the audio region will be defined by the CFI parameter or ranges, and a reading position variable would be maintained in the CFI format which changes or increment based on the user's reading speed to trigger the playback of the audio regions of the soundtrack when their CFI value match the reading position variable.

In this example, the soundtrack comprises multiple audio regions and playback of two or more regions may partially or entirely overlap such that two or more audio regions can playback concurrently if desired. The soundtrack is provided with multiple channels for playback and overlapping audio regions are designated different channels in the set of available channels to allow for concurrent playback. This enables different audio tracks, such as sound effects, ambient noise, or background music to be concurrently played and mixed together to provide an overall soundtrack that enhances the user's reading experience for that particular electronic text. Typically, the audio data for each audio region includes an audio type, such as "music", "ambience", or "effect". The selected audio type is intended to define the nature of the audio region. For example, if an audio region is for background music, then the audio type selected will be "music". If the audio region is a sound effect, then the "effect" audio type is selected. If the audio region is intended to be an ambient sound or noise, then the "ambience" audio type is selected.

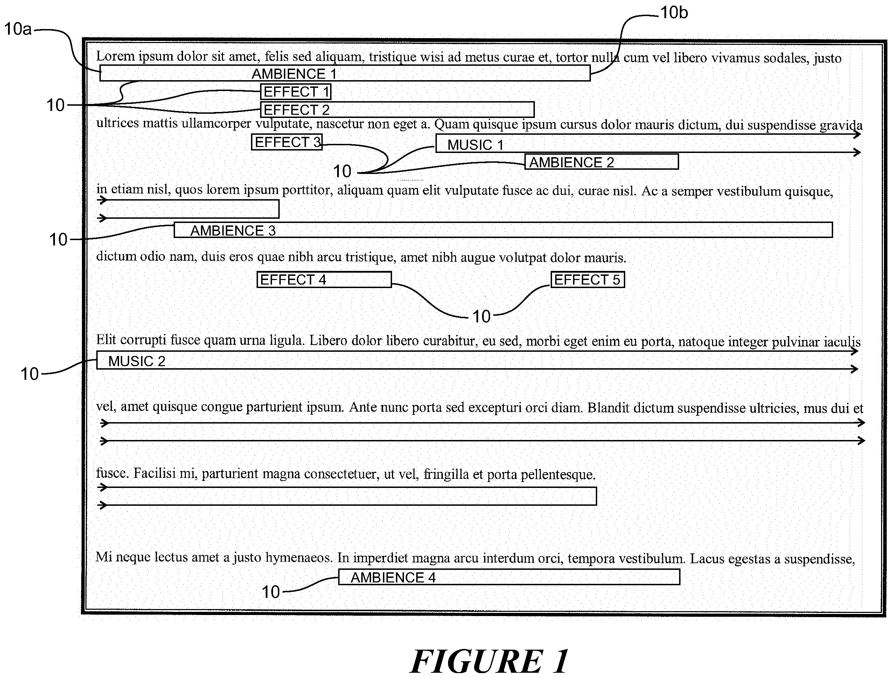

By way of example, Figure 1 shows a portion of electronic media content comprising electronic text only. Figure 1 also overlays the text with a schematic representation of a number of audio regions 10 configured for playback during reading of the electronic text in the schematic representation, the audio regions 10 are each represented by a bar or underline that extends below the portion of text to which it relates. The start of each bar or underline of the audio region represents the start position at which the audio track of that audio region will commence playback and the end 10 represents the position in the electronic text at which the audio track of the audio region will cease playback. Each audio region may extend over a single word or group of words, a line, multiple lines or even pages. As shown the audio regions may overlap such that they playback concurrently.

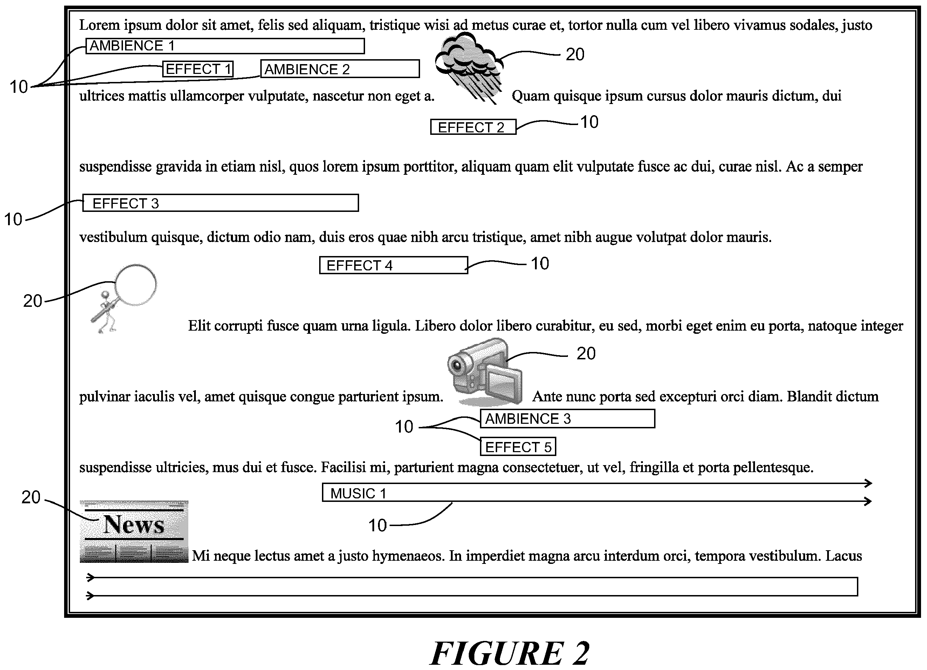

Referring to Figure 2, the electronic media content may comprise multimedia content comprising text and imagery, whether static or moving. Figure 2 shows such an electronic text containing static images 20. For such electronic media content, the soundtrack audio region may have start and stop positions which either correspond to text or imagery. For example an audio region may be configured to start on a particular word, and then end when a user is expected to be looking at a particular image embedded within the text. Alternatively, an audio region may be configured to commence playback when a user is expected to be viewing a particular embedded image. It will be appreciated that for image-based multi-media content such as comics, the reading position identifier may identify the image the user is expected to be viewing, and the reading speed may be in the form of scroll or scan speed for the images, for example images per second or minute, for example.

### 2. Automatic creation of synchronised soundtracks

As noted above, the automatic creation system and methods will be described by way of example only in the context of a soundtrack of the type described in WO2013/015694 which may comprise a single or multiple layers of audio regions of different types. In this embodiment, the automatic creation system and method is configured to automatically create at least the music layer or music audio regions of the soundtrack. The ultimate soundtrack may either simply comprise the single layer of music audio regions or may be combined with one or more additional different layers of audio regions such as, but not limited to, ambience layers or sound effect layers or narration layers.

### 2.1 Overview of automatic creation system and method

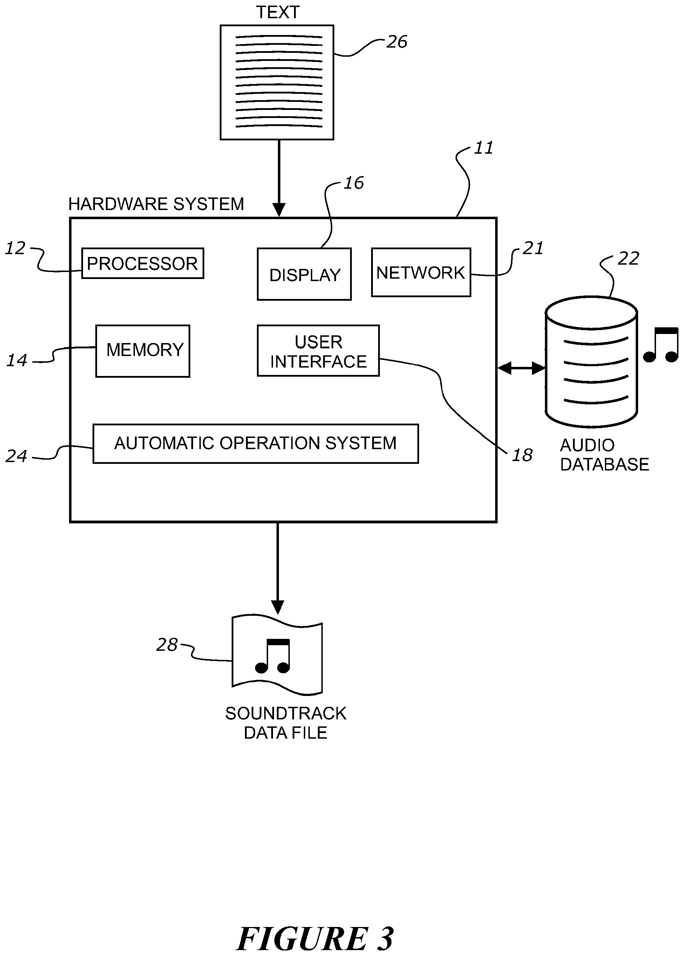

Referring to Figures 3, the automatic creation system may be implemented on any suitable hardware system or electronic user device 10. The system 10 typically comprises at least a processor 12 and associated memory 14 for executing or implementing the automatic creation algorithms and data processing. Optionally, the user device 10 may further comprise a display 16, user interface 18, and network or communications interfaces 20 as is typical with many computing or electronic processing platforms. The system 10 may also comprise an integrated audio database 22 of audio files, such as music files, and/or may be able to access or communicate with one or more remote audio databases or audio servers or cloud-based audio application streaming service over a data communication link or network such as the internet. The automatic creation system 24 may be executed or implemented on the system, and may be in the form of software or other computer-readable instructions executable by the processor. The system 10 is operable to receive or retrieve the text 26 for which a soundtrack is to be produced, and then execute the automatic creation algorithms of the automatic creation system 24 to generate the soundtrack 28.

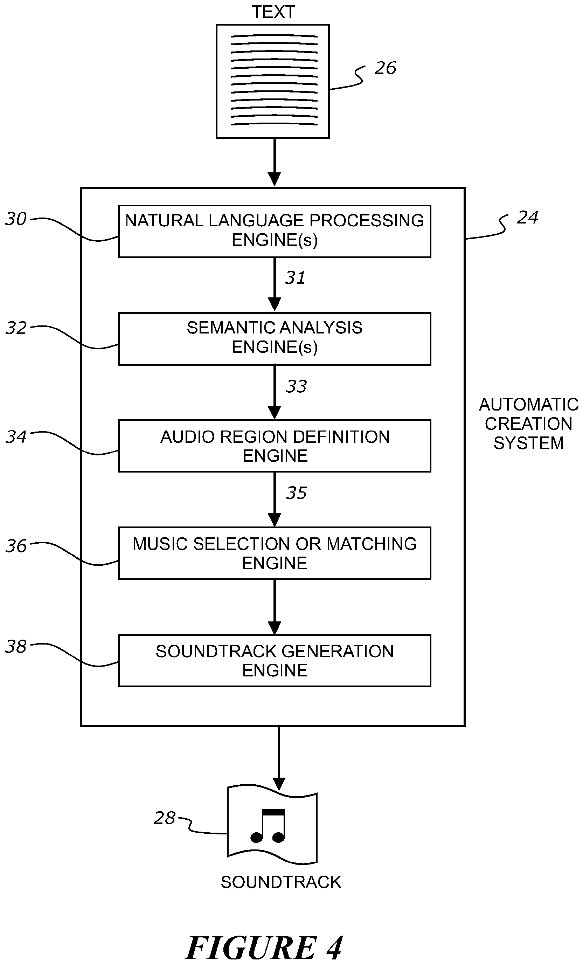

Referring to Figure 4, the main or primary modules of functions of the automatic creation system 24 will be described. The automatic creation system is configured to receive or retrieve raw text data in electronic form representing the text 26. The text 26 itself may originally be in electronic form or alternatively the raw text data may be obtained by scanning and optical character recognition (OCR) of printed text.

In this embodiment, the system 24 comprises one or more natural language processing (NLP) engines or modules 30 that are configured to process the incoming raw text data representing the text 26 to generate processed text data 31 ready for semantic analysis. The processed text data 31 may for example identify the individual sentences and tokens within those sentences in the raw text data. As will be explained, the tokenization parameters may be customised or controlled to determine what constitutes a distinct token, but typically the tokens at least represent the distinct individual words and/or word concepts in the text, and optionally also punctuation.

The processed text data 31 is received and processed by one or more semantic analysis modules or engines 32 that are configured to generate segment emotional data profiles 33 for individual text segments of the text. In this embodiment to be described by way of example only, the text is segmented into text segments representing the individual sentences of the text or a series of text segments is otherwise identified. As such, the segment emotional data profiles correspond to sentence emotional data profiles in this embodiment. However, it will be appreciated that the automatic creation system and method may also be applied based on alternative segmenting schemes such that the granularity or resolution of the segmenting can be altered. For example, alternative embodiments include, but are not limited to, segmenting into text segments according to a predetermined number of words or sentences, or segmenting based on paragraphs or chapter boundaries such that text segments represent respective paragraphs or chapters of text. In the embodiment described below, the segmenting and processing is at a sentence level and as such the segment emotional data profiles are referred to as sentence emotional data profiles, but the same principles apply should a different segmenting scheme be used in alternative embodiments. For example, if segmenting into text segments representing chapters, then the segment emotional data profile would represent or correspond the chapter emotional data profile. For clarity of explanation, the embodiment below is described in the context of sentence segmenting and processing, but it will be appreciated that the phrase 'sentence emotional data profile' is an example of a segment emotional data profile in the context of an embodiment in which the text segments are represented by individual sentences.

The sentence emotional data profiles 33 (example of segment emotional data profiles) are received and analysed by the audio region definition engine 34 to identify text region candidates for associated audio regions of the soundtrack. In this embodiment, the audio region definition engine 34 is configured to identify text regions of multiple adjacent sentences (example of text segments) having an emotional association by processing the sentence emotional data profiles 33 with respect to predefined rules. The audio region definition engine 34 is then configured to generate audio region data 35 defining the audio regions corresponding to the identified text regions. The audio region data 35 comprises data indicative of a start text position indicative of the word in the text at which the audio region is to commence playback, a stop text position indicative of the word in the text at which the audio region is to cease playback, and a generated region emotional profile based on the sentence emotional data profiles of the sentences within its associated text region.

A music selection or matching engine or engines 36 are then provided that receive the audio region data 35 from the audio region definition engine. The music selection or matching engine processes the audio region data and audio profile information of audio files from one or more audio databases to either select or identify audio file candidates that correspond or are suitable for playback in the audio regions. The matching or selection is based on identifying a correspondence or match between the emotional profile of the audio region and the emotional profile of the audio files, such that the audio enhances or amplifies the emotion felt by the reader when reading the text during synchronised playback of the soundtrack with the reading of the text.

A soundtrack generation engine 38 is provided that receives the audio region data and selected or candidate audio data for each audio region, and generates a soundtrack data file or files representing the automatically created soundtrack 28 for playback. In one configuration, the soundtrack data file or files are provided as separate files for playback by a soundtrack playback engine or device. In another configuration, the soundtrack data file or files are packaged or integrated with electronic text representing the associated text 26 as a multi-media content file for display (text) and playback (soundtrack audio) on a suitable electronic user device or playback system. The audio files may be integrated with the soundtrack data file or files, or alternatively the soundtrack data file or files may contain links or file path information or source information to at least some or all of the audio files for later retrieval (download or streaming) from an audio file source, library or service for playback.

An embodiment of each of the main modules of the automatic creation system 24 will now be explained in further detail by way of example only in the context of this sentence-level segmenting embodiment, but which also apply and could be adapted to alternative segmenting schemes as noted above.

### *2.2 Text analysis - NLP engine*

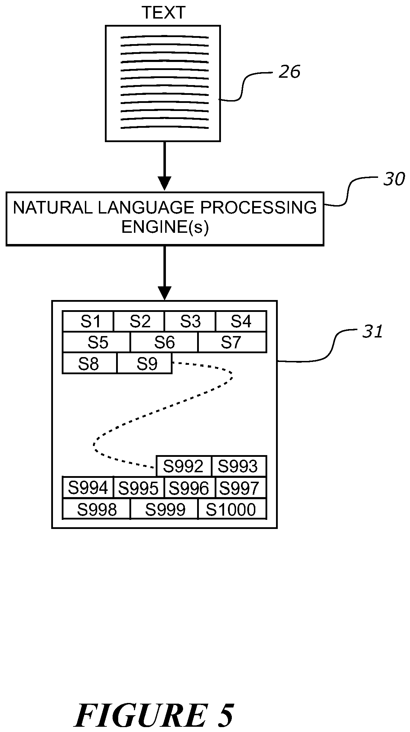

Referring to Figure 5, in this embodiment the natural language processing (NLP) engine 30 is configured to process the raw text data 26 representing the text to generate output processed text data 31 that identifies the individual sentences and tokens within those sentences in the raw text data. The NLP engine can be configured to determine how tokenization will be applied based on tokenization control parameters. In this embodiment, the NLP engine is configured such that each word, word concept, and punctuation (e.g. full stops, apostrophes) represent individual distinct tokens. However, in alternative embodiments, it will be appreciated that a lower or higher resolution of tokenization may be applied. In one example, brackets or other characters may be deemed to also be tokens in alternative higher-resolution tokenization embodiments. In another example, syllables may represent individual tokens. In other examples, in which lower-resolution tokenization is applied, only single words may be deemed to represent tokens or only words and a predefined number or list of word concepts (e.g. two or three adjacent words representing a single word concepts) may be extracted as individual distinct tokens.

In one configuration, the NLP engine is configured to apply a series of natural language processing libraries to the raw text such as, but not limited to, those provided by the Apache Software Foundation (ASF). In this embodiment, the NLP engine is configured to use two sets of functionality from such libraries. Firstly, the NLP libraries are used to determine where individual sentences begin and end using Sentence Boundary disambiguation. The NLP engine is then configured to tokenize the text into individual tokens within each sentence based on tokenization control parameters as noted above. Secondly, the NLP libraries are used to apply Part of Speech (POS) tagging to the text. This POS tagging is configured to identify and tag syntactic components for the tokens in a sentence such as, but not limited to, verbs, nouns, adjectives, and prepositions.

The output of the NLP engine is processed text data representing the text that identifies the individual sentences in the text, including their start and end words, and identifies the tokens representing individual words within each sentence. The tokens may also be tagged with their associated POS tag data identifying their syntactic characteristic.

In this embodiment, if a token has multiple or no syntactic characteristic, a default POS tag representing 'unknown', although this is not essential.

By way of example only, Figure 5 shows an example of raw text 26 comprising a thousand sentences being processed by the NLP engine 30. The output processed text data 31 represents the individual sentences S1 to S1000, and the tokens within each sentence. By way of example, the sentence data for the first sentence S1 may comprise a start and end text position value representing or indicative of the position of the start and end tokens (such as words) of the sentence in the context of the overall text. The start and end text position may be a token count value or index value for example, such as S1, start token = 1, end token = 15, and the sentence data for S1 also comprises data representing the individual 15 tokens within the sentence, and any associated POS tag data.

### 2.3 Text analysis - semantic analysis engine

The semantic engine or engines 32 of the automatic creation system 24 receive and process the processed text data 31 from the NLP engine 30 to generate sentence emotional data profiles for each individual sentence in the text. The sentences are analysed and profiled based on a continuous emotion model that is defined by a predetermined number of emotional category identifiers, as will be explained further below.

### Continuous emotion model

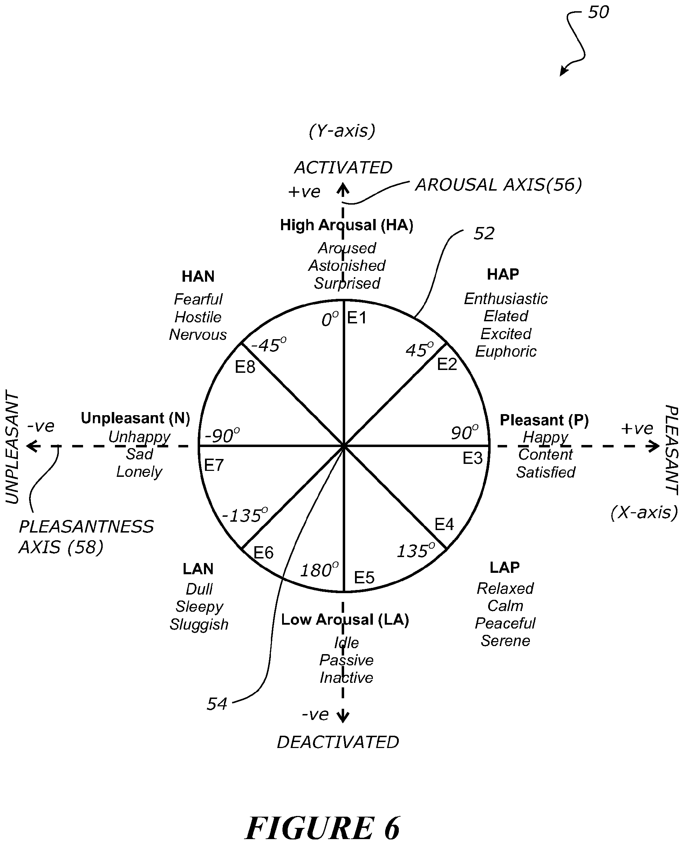

Referring to Figure 6, the continuous emotion or sentiment model 50 used by the semantic analysis engine is depicted. The continuous emotion model 50 is based on a circumplex and creates a continuum of emotion based on a predetermined number of emotional category identifiers. In this embodiment, the continuous emotion model is based on eight basic sets of emotions or emotional category identifiers, namely: arousal, enthusiasm, fear, idleness, dullness, pleasantness (happy), relaxation, unpleasantness (unhappy). In this explanation, the eight emotional category identifiers of the model 50 are referred to as E1 - E8 as shown in Figure 6.

In this embodiment, the continuous emotion model 50 comprises a 2-dimensional circular reference frame defined by a circular perimeter or boundary 52 extending about a central origin 54, with each emotional category identifier E1-E8 represented by a segment or spoke of the circular reference frame to create a continuum of emotions. In this embodiment, the segments are equal in size or the reference spokes are equi-spaced about the circular reference frame.

In this embodiment, the 2-dimensional circular reference frame of the model 50 comprises a set of two main orthogonal reference axes 56,58 extending from the origin 54 that represent arousal (y-axis 56) and pleasantness (x-axis 58) dimensions. The y-axis 56 represents the 'arousal' dimension and traverses from activated or high arousal/energy at or toward one extreme or end of the y-axis (e.g. at one point on the circular perimeter 52 of the model) to deactivated or low arousal/energy at or toward the other extreme or end of the y-axis (e.g. a diametrically opposed point on the circular perimeter of the model). The x-axis 58 represents the 'pleasantness' dimension and traverses from pleasant or happy at or toward one extreme or end of the x-axis (e.g. at one point on the circular perimeter 52 of the model) to unpleasant or unhappy at the other extreme or end of the x-axis (e.g. a diametrically opposed point on the circular perimeter of the model 50). The arousal axis 56 is configured to divide the circular model 50 into two 'arousal' halves, one representing emotions of activation (positive/+y) and the other representing emotions of deactivation (negative/-y), and the pleasantness axis 58 is configured to divide the circular model into two 'pleasantness' halves, one representing pleasant emotions (positive/+x) and the other representing unpleasant emotions (negative/-x), the pleasantness halves being at an orthogonal orientation with respect to the arousal halves. The segments or spokes associated with the emotional category identifiers E1-E8 are arranged about the circular reference frame according to their position or association with the arousal and pleasantness axes 56,58. In this embodiment, each of the eight emotional category identifiers E1-E8 are represented by a spoke or octant of the 2-dimensional circular reference frame.

In this embodiment, emotional category identifiers E1, E3, E5, E7 are aligned with the main arousal and pleasantness axes, and emotional category identifiers E2, E4, E6, E8 are situated respectively at 45° between the main x and y-axes, and represent a combination of the emotions from the main axes as demonstrated in the following table:

| X-axis (pleasantness) | Y-axis (arousal) | In between main X- and Y-axes |
|---|---|---|
| +x (happy) - E3 | +y (high energy) - E1 | Enthusiasm, euphoria - E2 |
| +x (happy) - E3 | -y (low energy) - E5 | Peaceful, serenity - E4 |
| -x (unhappy) - E7 | +y (high energy) - E1 | Nervosity, hostility - E8 |
| -x ((unhappy) - E7 | -y (low energy) - E5 | Sluggish, sleepy - E6 |

In this embodiment the continuous emotion model 50 is defined by eight emotional category identifiers, but it will be appreciated that the number of emotional category identifiers may be altered if desired. By way of example only, a reduced number such as four emotional category identifiers may be used (e.g. those corresponding to the main arousal and pleasantness axes), or a higher number such as 16 emotional category identifiers may be used should the model be segmented to a higher resolution, or some other suitable number.

The continuous emotion model 50 creates a continuum between the emotions. Any angular position about the circle represents an emotional state that is a function or combination the emotions represented by the one or more emotional category identifiers (spokes) associated with that angular position. The distance from the origin to the outside radius of the circle is taken to indicate an intensity of the emotion. Points mapped into the model that are closer to the origin of this circle represent a low value or intensity of the indicated emotion. Points closer to the radius or perimeter of the circle represent higher or a more intense value of the emotion. In summary, if emotional points or vectors are mapped into the model or reference frame, their angular position relative to the axes represents their emotional state in the continuum defined by the emotional category identifiers, and their distance from the origin or the magnitude of the vector represents the intensity of that emotion.

In this embodiment, the continuous emotion model used by the semantic analysis engine 32 is further defined by or has associated lexicon data representing a set of lexicons or indexes for the emotional category identifiers. For example, a lexicon or index is defined for each emotional category identifier E1-E8. Each lexicon comprises data indicative of a list of words and/or word concepts that are categorised or determined as being associated with the emotional category identifier associated with the lexicon. These lexicons are lists of words and/or word concepts that have been determined as belonging to one or more emotional category E1-E8. By way of example, these lists are typically between 100 to 500 words and word concepts each. The lists of words and word concepts include verb conjugations, plurals/singulars, adjectives and adverbs where appropriate.

In one configuration, the lexicon data may be fixed or static such that the lists in each lexicon are fixed. In an alternative configuration, the lexicon data is dynamic such that it may be modified or updated to thereby selectively modify or adjust the list in each lexicon. In one form, the words and/or word concepts in each lexicon are mutually exclusive such that they only appear in one lexicon. In an alternative form, the words and/or word concepts of each lexicon are not mutually exclusive in that they may appear in more than one lexicon. In this embodiment, at least some words and/or word concepts may be shared between two or more lexicons.

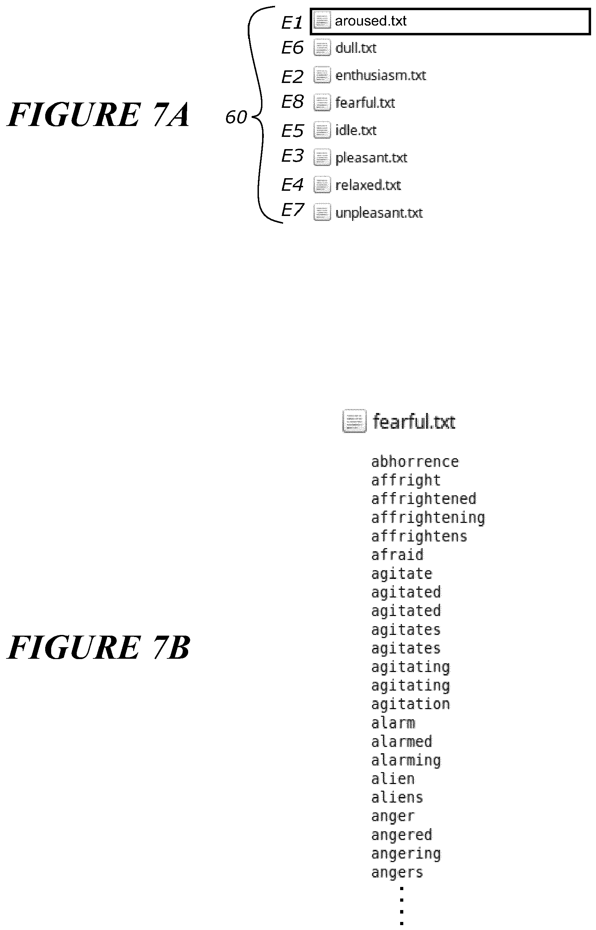

Referring to Figure 7A, the lexicon data may be in the form of one or more text or data files (lexicons) comprising the lists of words and/or word concepts. In this embodiment, each of the eight lexicons 60 are defined in respective text data files comprising their respective lists of words and/or word concepts. Referring to Figure 7B, an example of a portion of the lexicon text file list for the 'fearful' emotional category identifier. As shown, the words in the fearful lexicon all have an association with the emotion of fear.

In one embodiment, each lexicon may comprise a list of words or word concepts associated with the emotional category identifier to which the lexicon defines. In another configuration, each lexicon may comprise a list of words or word concepts, and each word or word concept in the lexicon may configured with one or more lexicon attribute values or identifiers. In an embodiment, each word or word concept may have a lexicon attribute value representing a weighting value or factor that represents how strongly the word or word concept reflects the emotion that the lexicon represents. By way of example, the weighting factor may be set between a value of 0 and 1, but it will be appreciated that any scale may be used. In such embodiments, the weighting value associated with the word or word concept may then optionally be used during the semantic analysis to determine the emotional profile of the text, as will be discussed further below. Additionally, each word or word concept may have a lexicon attribute value representing a syntactic characteristic or identifier associated with the word or word concept. For example, the syntactic identifier may represent the part of speech associated with the word, such as whether it is a noun, verb, adjective, adverb, or other parts of speech, or in the case of a word concept whether it is an idiom or short phrase for example. The syntactic characteristic identifier allows the lexicons to distinguish between the use of words or word concepts being used in different syntactically ways in the speech. In some cases only some syntactic uses of a word may be included in the lexicon, and others included, or if two or more syntactic uses of the same word are included in the lexicon, each is distinct any may have its own distinct weighting factor or value applied. For example, noun-usage of a word might be given a higher weighting than its verb-usage, or vice versa, or they may be given the same weighting, depending on how the lexicon is configured.

*Semantic analysis - overview*

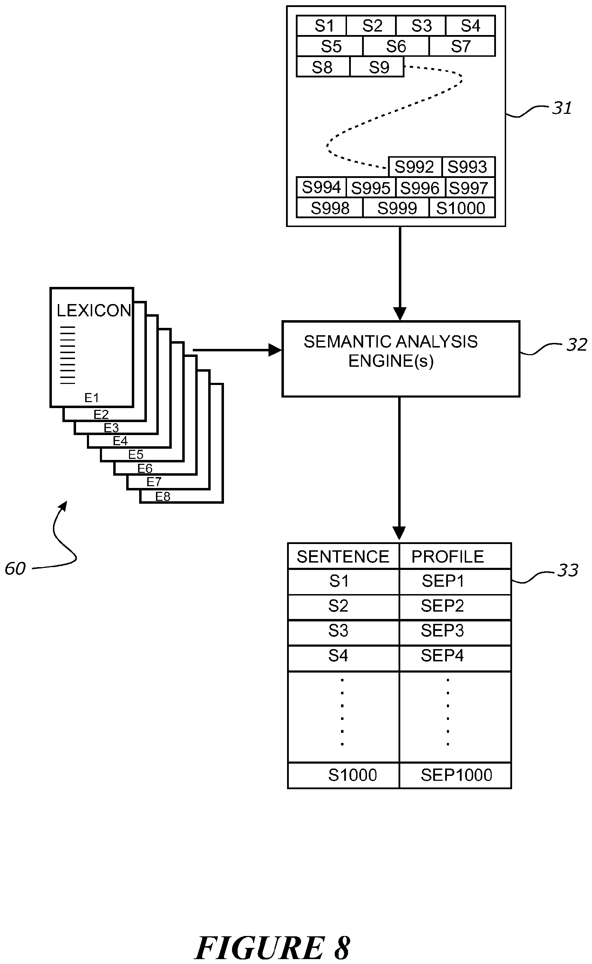

Referring to Figure 8, the semantic analysis engine 32 is configured to receive the processed text data 31 from the NLP engine 30 as previously discussed. The semantic analysis engine 32 is configured to perform one or more parses of the text based in the input lexicon data sets 60 to generate sentence emotional data profiles for each individual sentence in the text. As shown, the output of the semantic engine is a data set 33 comprising a sentence emotional data profile for each sentence. For example, analysis of sentence S1 generates an associated sentence emotional data profile SEP1, and S2 generates associated profile SEP2, and so on for each sentence. The sentence emotional data profiles 33 output may be absolute profiles or relative profiles adjusted based on a baseline statistical values of the entire text, or both, as will be further explained below.

*Absolute sentence emotional data profiles*

In this embodiment, the semantic analysis engine 32 is configured to parse each sentence in the text and generate a respective absolute sentence emotional data profile that represents for each emotional category identifier the absolute count or frequency of words in the sentence corresponding to the associated lexicon. For example, when processing a sentence, the semantic engine is configured to provide a counter for each emotional category identifier. The semantic engine 32 then scans through each token or just tokens representing words or word concepts in the sentence. If a scanned token belongs to one or more emotional categories E1-E8 (i.e. the token represents a word or word concept that matches or corresponds to one or more of the associated lexicons), then the associated counters for those emotional categories are incremented in the sentence emotional data profile. There may be a default counter value increment (e.g. 1) if a token matches a lexicon word or word concept, or if the lexicons are provided with a weighting value for each word or word concept, then the weighting value may determine the counter increment value (e.g. if the word has a weighting value of 0.5 on a scale of 0 to 1, then the counter will be incremented by 0.5 for example or the default counter value may be modified by some multiplier or function based on the weighting value.

Once a sentence has been processed, the sentence emotional data profile for the sentence is generated in the form of a multi-dimensional data set or data array comprising a plurality of count values, one for each emotional category identifier. Each count value corresponding to the number of words or word concepts in the sentence matching to the lexicon associated with an emotional category identifier. In this embodiment, the semantic engine 32 is configured to count the total number of tokens scanned in the sentence and can generate a sentence emotional data profile comprising a data array of a plurality of frequency values, one for each emotional category identifier. In this embodiment the frequency values are sentence frequency values calculated based on dividing the absolute count values for the sentence by the total number of tokens in the sentence. The frequency values may be expressed as percentages or fractional values. This process is repeated for each sentence to generate a sentence emotional profile for each sentence. As will be appreciated, the count values or frequency values represent a score value for each emotional category identifier in the emotional profile.

In this embodiment, the continuous emotional model 50 is defined by eight emotional category identifiers E1-E8. As such, each sentence emotional data profile is an eight value data set or data array comprising eight count or frequency values, and each count or frequency value corresponds to a respective emotional category identifier. These multi-dimensional data arrays of the sentence emotional data profiles are multi-dimensional representations of the emotional profile of the sentences, with each emotional category identifier E1-E8 representing a distinct dimension within the continuous emotion model 50. The absolute count values or frequency values of the multi-dimensional data set represent or are indicative of the absolute intensity of the sentence for each emotional category identifier.

*Baseline statistical values for generating relative sentence emotional data profiles*

In this embodiment, the semantic engine 32 is configured to analyse the entire text to generate baseline statistical values relating to each emotional category identifier E1-E8. The nature of the baseline statistical values calculated may be selected based on the type of absolute sentence emotional data profiles that are generated, for example whether they are generated with count values or frequency values. The baseline statistical values generated are intended to provide a measure of the global or average intensity of each of the emotional categories E1-E8 of the continuous emotion model 50 across the entire text. The purpose of calculating or determining baseline or global data relating to the text is to enable the absolute sentence emotional data profiles to be normalised or scaled based on or as a function of the baseline statistical values to generate relative sentence emotional data profiles. In some embodiments and/or applications, the relative sentence emotional data profiles may be more reflective of the intensities of the emotions expressed in a sentence in the context of the global emotional intensities of the entire text. In some embodiments and/or applications, relative emotional data profiles lend themselves more readily to being able to identify and map true emotional transitions in the text as each sentence is compared to a 'global' or 'overarching' set represented by the text as a whole being the statistical background. In some applications, relative emotional data profiles enable analysis to be conducted in respect of emotional changes relative to a mean, which can take into account the style of the author in the context of text representing a book for example. Various example configurations are explained below for generating relative sentence emotional data profiles.

In this embodiment, the baseline statistical values are calculated for the entire text, and those global values are then used to convert the absolute sentence emotional data profiles into relative ones based on the global values. It will be appreciated that in alternative configurations the baseline statistical values may be calculated at a higher resolution, such as per paragraph or per chapter (in the context of a text in a book), and the relative sentence emotional data profiles can be calculated based on their associated paragraph or chapter baseline statistical values for example.

*First example configuration - relative sentence emotional data profiles*

In a first example configuration, the semantic engine 32 is configured to calculate baseline statistical values for the entire text that represent the mean absolute count value per sentence per emotional category identifier and an associated count value standard deviation value per emotional category identifier. The mean absolute count value for an emotional category is calculated based on summing all the absolute count values for the category from the sentence emotional data profiles, and dividing the total by the number of sentences.

Once the baseline values are calculated, the semantic engine 32 is then configured to convert the absolute sentence emotional data profiles comprising the absolute count values into relative sentence emotional data profiles based on a function of the mean absolute counter values and/or associated standard deviation values per emotional category identifier from the baseline statistical values. In one form, the semantic engine 32 is configured to generate relative sentence emotional data profiles in the form of multi-dimensional data sets comprising relative count values for each emotional category identifier that represent the absolute count value as a function of the number of standard deviations it is from the mean. By way of example, the relative count value for emotional category E1 in a sentence is calculated based on the absolute value of the difference between the absolute count value and the mean absolute count value for E1, divided by the standard deviation for E1. These calculations are applied similarly to all count values across all emotional categories in the sentence emotional data profile, and this process is applied to each sentence emotional data profile.

*Second example configuration - relative sentence emotional data profiles*

In a second example configuration, the semantic engine 32 is configured to calculate baseline statistical values for the entire text that represent either:

(a) the global frequency values per emotional category identifier and associated sentence frequency value standard deviation per emotional category identifier calculated based on the global frequency values, or

(b) the mean sentence frequency values per emotional category identifier and associated sentence frequency standard deviation values per emotional category identifier calculated based on the mean sentence frequency values.

The semantic engine 32 is configured to calculate the baseline statistical values for (a) by scanning the entire text and for each emotional category identifier E1-E8 and incrementing a respective global counter value for an emotional category identifier if a token corresponds with its associated lexicon data set. The result of this scanning process is eight global count values, one for each emotional category identifier, that represent the total number of tokens in the text corresponding to the lexicon of each emotional category identifier. The global count values are then converted to global frequency values by dividing each by the total number of tokens scanned in the text. The semantic engine 32 is also configured to generate an associated sentence frequency standard deviation value per emotional category identifier based on the global frequency values.

The semantic engine 32 is configured to calculate the baseline statistical values for (b) based on the frequency values from the sentence emotional data profiles. The mean sentence frequency value for an emotional category is calculated based on summing all the absolute frequency values for the category from the sentence emotional data profiles, and dividing the total by the number of sentences in the text. The semantic engine 32 is also configured to generate an associated sentence frequency standard deviation value per emotional category identifier based on the individual absolute frequency values from the sentence emotional data profiles and the calculated mean sentence frequency value.

Once either of the baseline value sets (a) or (b) are calculated, the semantic engine 32 is then configured to convert the absolute sentence emotional data profiles comprising the absolute frequency values into relative sentence emotional data profiles based on or as a function of the calculated global frequency values and/or associated standard deviation values per emotional category identifier, or based on the mean sentence frequency values and/or associated sentence frequency standard deviation values per emotional category identifier. In one form, the semantic engine 32 is configured to generate relative sentence emotional data profiles in the form of multi-dimensional data sets comprising relative frequency values for each emotional category identifier that represent the absolute frequency value as a function of the number of standard deviations it is from the global frequency value or mean sentence frequency value. By way of example, in one embodiment the relative frequency value for emotional category E1 in a sentence is calculated based on the absolute value of the difference between the absolute frequency value and the global frequency value or mean sentence frequency value for E1, divided by the respective associated standard deviation for E1. These calculations are applied similarly to all frequency values across all emotional categories in the sentence emotional data profile, and this process is applied to each sentence emotional data profile.

*Output of semantic engine*

The output of the semantic engine 32 is a set of sentence emotional data profiles that can be further analysed by the audio region definition engine 34 to configure the audio regions of the soundtrack. As discussed, the sentence emotional data profiles are multi-dimensional data sets, each set having a counter value or frequency value per emotional category identifier. As discussed, the counter values or frequency values may be absolute or converted to relative values based on the calculated baseline or global statistics relating to the entire text. In either case, the values in the multi-dimensional data sets of the sentence emotional data profiles represent absolute or relative intensity values for each emotional category identifier. In some embodiments, the semantic engine 32 may be configured to only calculate and output the absolute sentence emotional data profiles for further processing in the automatic creation process, such as by the audio region definition and music selection engines. In other embodiments, the semantic engine 32 may be configured to calculate baseline statistics as previously discussed for converting the absolute emotional data profiles into relative emotional data profiles, and in such embodiments the further processing may be based on the relative emotional data profiles and/or the absolute data profiles.

As will be further explained, the multi-dimensional data sets of the sentence emotional data profiles (whether absolute or relative) may be cast or mapped or transformed into the 2-dimensional circular reference frame of the continuous emotion model 50 (see Figure 6). In this embodiment, the continuous emotion model 50 comprises eight emotional category identifiers E1-E8, and this generates an eight-dimensional data set comprising eight emotional intensity values for each sentence. Each of the eight intensity values can be considered as a vector extending from the origin of the 2-dimensional circular reference frame of the model 50. Each of the eight vectors for a sentence can be defined by polar co-ordinates, with the radial length or distance from the origin calculated based on a function of its intensity value (higher intensity being further away from the origin), and the angle dictated by the position of the spoke of the associated emotional category identifier in the reference frame, such as $E1 = 0°$, $E2 = 45°$, $E3 = 90°$, $E4 = 135°$, $E5 = 180°$, $E6 = -135°$, $E7 = -90°$, $E8 = -45°$.

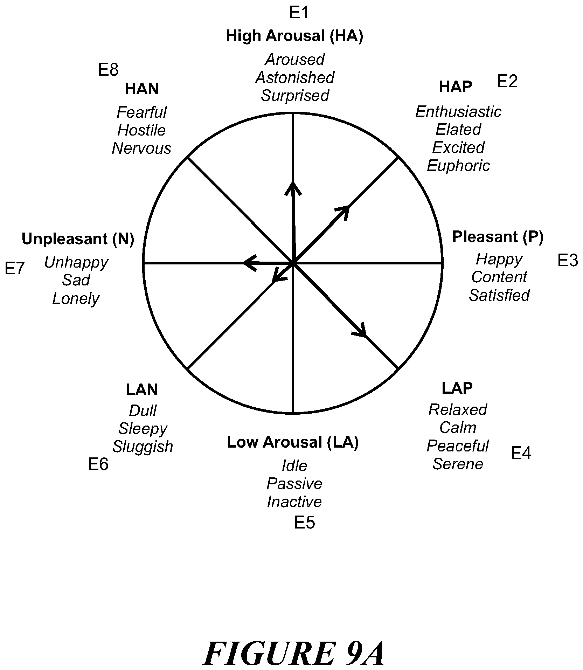

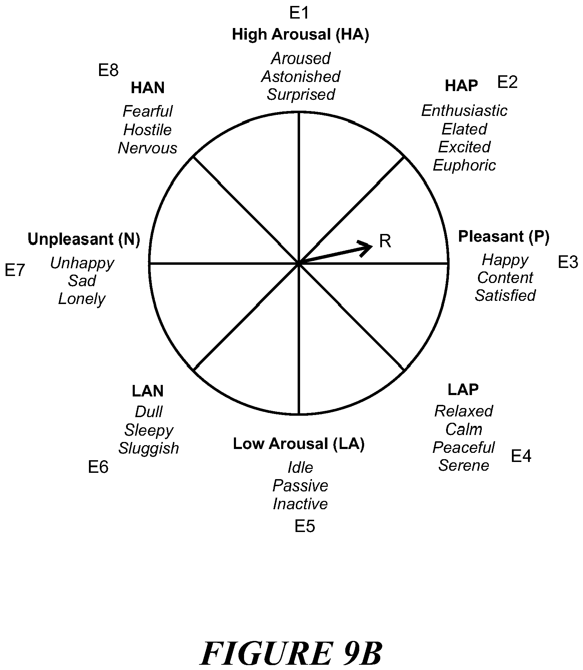

By way of example, Figure 9A depicts the individual eight vectors for the sentence emotional data profile of a sentence having the following intensity values {E1=2, E2=2, E3=0, E4=3, E5=0, E6=0.5, E7=1, E8=0}. If an emotional category lacks intensity, its vector is located at the origin with no length. The 8-dimensional data set can also be cast or transformed into a single resultant (R) vector as shown in Figure 9B, which represents the resultant vector from the summation of the individual vectors of Figure 9A or can be cast as a single resultant point in the circle defined by 2-dimensional co-ordinates, such as Cartesian co-ordinates or polar co-ordinates. By way of example, the 8-dimensional vector can be cast or transformed into a single resultant vector (R) having co-ordinates in a unit circle representation of the circular reference frame of the continuous emotion model 50.

In one configuration, the 8-dimensional vector representing the sentence emotional data profile of a sentence can be cast as a 2-dimensional vector or a point in Cartesian co-ordinates (x, y) in the unit circle representing the model 50 using a sine / cosine cast. Given the degrees above of the unit circle for the emotional categories, a loop is applies to each of the eight intensity values as follows to generate the resultant (x, y) co-ordinates of the resultant vector as follows:

- normalize the 8-dimensional vector
- set unit_circle_x = 0.0
- set unit_circle_y = 0.0

for each of the eight emotional categories do:

   degree_for_emotion is one of the eight degree values above, one for each emotion

$$unit\_circle\_x = unit\_circle\_x + cosine(degree\_for\_emotion)*(emotion\_vector.length * 0.3 + abs(sentiment\_value) * 0.7)$$

$$unit\_circle\_y = unit\_circle\_y + sine(degree\_for\_emotion)*(emotion\_vector.length * 0.3 + abs(sentiment\_value) * 0.7)$$

Therefore, each sentence has the ability to project a resultant vector or be represented by a point in the circular model 50, based on how many tokens it contains corresponding to the lexicons of the eight emotional categories, and optionally relative to the mean and standard deviation values of the baseline statistical values if relative emotional data profiles are used.

In the above example, the 'emotion_vector.length' represents the raw intensity values for the respective emotional category identifier extracted from the 8-dimensional vector after normalization. In this embodiment, the overall intensity value attributed to the emotional category identifier for the purpose of determining the resultant vector or position is a combination or function of the 'emotion_vector.length' and a sentiment value ('sentiment_value) calculated or determined for the text segment (in this case a sentence) associated with the 8-dimensional vector being processed. In this embodiment, the sentiment value is a value representing or indicative of whether the text segment represents a positive or negative sentiment. In one configuration, the sentiment value represents whether the text segment is positive or negative, and also an intensity of that sentiment relative to a scale. In one example, the sentiment value is a numerical value on a scale from a first threshold (e.g. -1.0) representing a very negative sentiment to a second threshold (e.g. +1.0) representing very positive sentiment. The sentiment value may be generated by any suitable sentiment analysis tool or engine, such as, but not limited to, any of the following sentiment analysis tools or engines: VADER (Valence Aware Dictionary and sEntiment Reasoner), Apache UIMA (part of OpenNLP), Weka, and Python NLTK (NLP toolkit). The sentiment value generated by the sentiment tool represents the emotional value of the sentence (the sentiment judgement). Typically the sentiment value is calculated using an emotional analysis library in the semantic engine 32 that generates or determines a sentiment value for each sentence between -1 and 1 (very negative to very positive). The absolute value of the sentiment value is used in the resultant vector calculation. It will be appreciated that any other suitable form of sentiment value generated by other suitable sentiment analysis tools or engines could be used, some examples of which are provided above.

As shown above, the weighting or scaling of contribution of the raw intensity value and sentiment value to the overall intensity value for the resultant or mapping calculation may be adjusted or configured as desired. In this example, 30% weighting or contribution is applied to the 'emotion_vector.length' value and 70% weighting or contribution is applied to the 'sentiment_value', but these weightings could be reversed or modified as desired. For example, each could have equal weighting, such as 50:50. In further alternative embodiments, the sentiment value may be omitted, such that the resultant vector or co-ordinates are calculated based solely on the 'emotion_vector.length' values (raw intensity values) from the 8-dimensional vector.

### 2.4 Audio regions definition based on text analysis - audio regions definitions engine

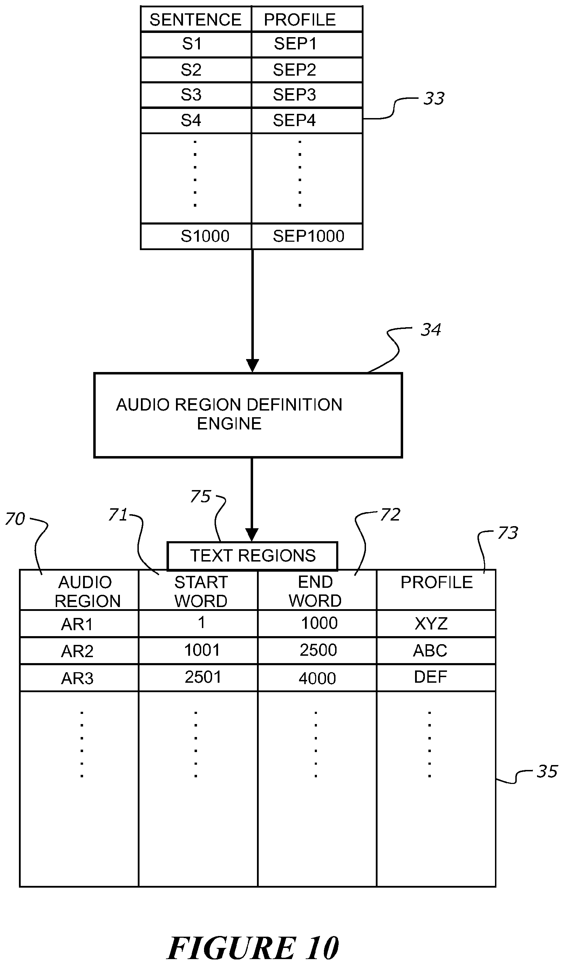

Referring to Figure 10, the audio region definition engine 34 is configured to receive the text analysis data 33 generated by the semantic analysis engine 32. The text analysis data may be considered to represent a text emotional profile map of the text. In this embodiment, the text analysis data 33 comprises the absolute sentence emotional data profiles of the sentences in the text, although it will be appreciated that in alternative embodiments that relative sentence emotional data profiles may be used if baseline statistical values have been calculated as previously described. In this embodiment, the absolute sentence emotional data profiles 33 for each sentence comprise absolute frequency or count values for each emotional category.

The audio region definition engine 34 is configured to analyse the received text analysis data 33 by processing the sentence emotional data profiles to identify text regions of multiple adjacent sentences having an emotional association with respect to predefined rules. The identified text regions define the audio regions of the soundtrack. For example, each identified text region generates a corresponding audio region of the soundtrack. The audio regions are configured to playback when their respective corresponding text region is being read. Based on the identified text regions, the audio region definition engine 34 generates audio region data 35 identifying the audio regions 70 for the soundtrack corresponding to the identified text regions 75. Each audio region data for an audio region has a start text position 71 indicative of the word (or token) in the text at which the audio region is to commence playback, a stop text position 72 indicative of the word (or token) in the text at which the audio region is to cease playback, and a generated region emotional profile 73 based on the sentence emotional profiles of the sentences within its associated text region. The generated region emotional profile 73 for each audio region is intended to define the emotional profile conveyed in that associated region or passage of text to enable appropriate matching music or audio to be selected.

An example of an audio region definition algorithm for segmenting or dividing that text into text regions representing groups of multiple adjacent sentences will be explained next. It will be appreciated however that one or more of the steps may be varied or substituted or omitted, in alternative embodiments of the algorithm. The algorithms can divide the text into text regions of adjacent sentences based on identifying reference sentences or regions representing emotional transitions based on thresholds, or grouping adjacent sentences having an emotional association based on predetermined rules or thresholds, or a combination of these techniques.

*Example audio region definition algorithm*

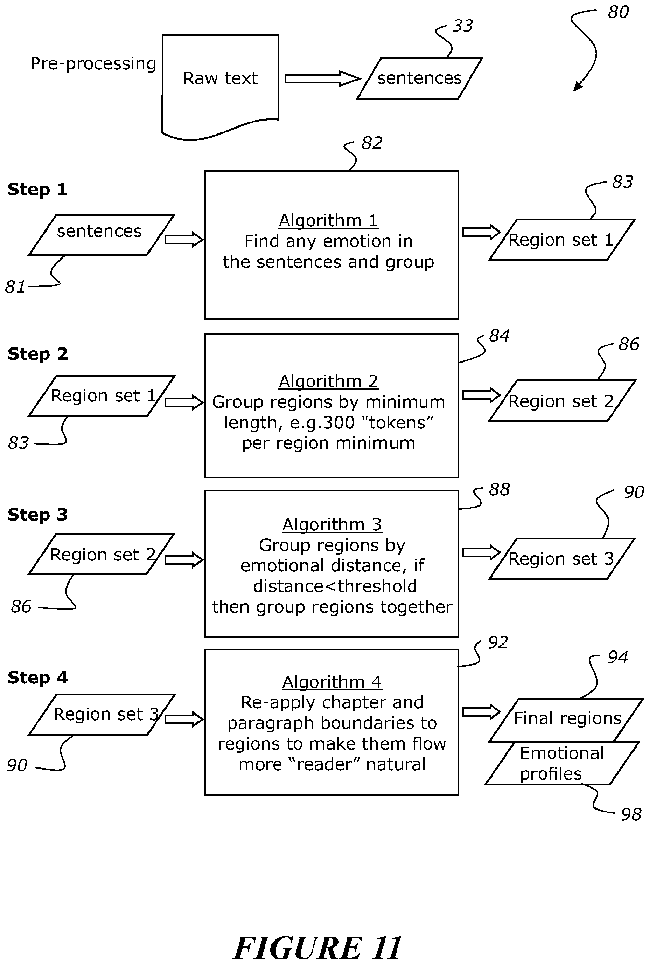

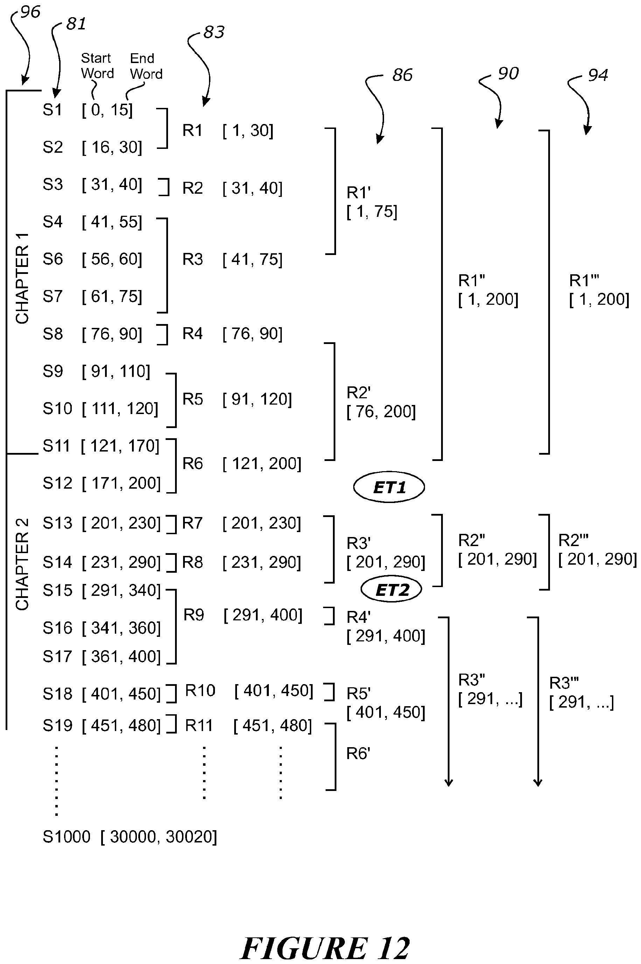

Referring to Figures 11 and 12, an example audio region definition algorithm will be explained. In this embodiment, the algorithm 80 is configured to identify text regions by defining all sentences as an initial set of text regions, and then iteratively grouping adjacent sentences into a set of larger text regions based on analysis of the sentence emotional data profiles and/or other predefined rules.

The algorithm flow and sub-algorithms are shown in Figure 11, and an example set of sentences (with start and stop words indicated) is shown in Figure 12 to demonstrate how the algorithm operates to group the sentences into regions, although the numbers used in the example are not representative of true data and are provided for explanation purposes only.

*Step 1: Analysing for neutral sentences*

The algorithm 80 commences with all sentences representing an initial set 81 of text region candidates S1-S1000. A first sub-algorithm 82 is then applied to those sentences to find any region of interest. In this embodiment, this is defined as any sentence of the text that has resultant coordinates in the continuous emotion model (as defined by its respective sentence emotional data profile) that is away from the origin by some predefined threshold, such as 0.001, or one permille of the unit vector length away from the origin). In particular, the first sub-algorithm 82 is configured to group sentences with neutral sentence emotional profiles with adjacent non-neutral sentence emotional profiles. In another configuration, a neutral sentence emotional data profile is determined based on a neutral sentence threshold that is indicative of minimal or neutral emotion being present in the sentence. In one example, a sentence may be considered to have a neutral sentence emotional data profile if its absolute or relative intensity values across all emotional category identifiers are below respective absolute or relative intensity thresholds, such as zero. The result of sub-algorithm 82 is that one or more of the sentences may be grouped together, or more particularly neutral sentences may be grouped with an adjacent non-neutral sentence. This defines a first set 83 R1-R11 of text regions. This sub-algorithm 82 tends to significantly reduce the number of regions relative to the initial set of all sentences being regions, particularly in the context of a text representing a book in which the number of regions can half for example.

*Step 2: Applying size thresholds*

The first set of regions 83 is then applied to a second sub-algorithm 84 that is configured to reduce the first set of text regions into a smaller second set of text regions based on grouping at least some adjacent text regions from the first set into larger text regions until all the text regions in the second set reach a predetermined size threshold. In this embodiment, the size threshold may be a token count or word count threshold value representing a minimum number of words required to be a text region candidate. The size threshold may be configurable based on the type or nature of the soundtrack required, such as the frequency of music changes desired. For example, the automatic creation system may be operable to configure a minimum text region size to add a control to how many audio regions are created and therefore how many music tracks are played back in the soundtrack. By way of example, the minimum length of a text region may be set at say 300 words. This dictates that the listener of the soundtrack will on average hear no more than one new music track for every 300 words read. This minimum threshold can also translate into or be configured as a minimum playback time threshold. In this example, if a nominal or average reader has a reading speed of about 150 words per minute (wpm), then the threshold will dictate that they will on average hear no more than one new music track for every 2 minutes of reading, and a reader having a reading speed of 300 wpm will on average hear no more than one new music track for every 1 minute of reading. Therefore minimum time thresholds may be set, and converted back into minimum word or token thresholds based on nominal or average reading speed variables or customised reading speed variables particular to an end user of the soundtrack. In Figure 12, by way of example only, adjacent regions from the first set 83 are grouped together into a second set of larger text regions 86 until they meet the minimum size threshold of spanning 50 words in the text (example only). For example, regions R1 (30 words), R2 (10 words), and R3 (35 words) from the first set are grouped into a new larger text region R1' having a total of 75 words, over the minimum of 50 words. Region R9 of the first set however remains as its own new region R4' in the second set as it comprises 110 words already.

In one form the sub-algorithm 84 is configured to scan through the regions in the first set 83 from the start and increment a token or word counter. As the counter goes over the predefined size threshold, a new text region for the second set 86 is defined as the previous one or more regions in the window prior to that scan point, including the current region that forced the counter over the threshold. Although in an alternative configuration, the current region at that scan point may be excluded from the first new region and be considered as the start of the next scan. Once the first new region of the second set is determined, the algorithm commences a new scan at the next adjacent region of the first set and resets the counter and repeats the process to generate the second new region of the second set, and so on.

Once the sub-algorithm 84 generates or defines all the text regions 86 of the second set, an interim text region emotional data profile is determined for each of the text regions 86. As shown in Figure 12, each text region in the second set 86 typically comprises a group of two or more adjacent sentences of the text. For example, region R1' comprises seven adjacent sentences S1-S7. The sub-algorithm 84 may be configured via various operating parameters to generate an interim text region emotion data profile for text region R1' based on the seven individual sentence emotional data profiles of the sentences S1-S7 in the group. In this embodiment, the interim text region emotional data profiles are in the same format as the sentence emotional data profiles. For example, the interim text region emotional data profiles are in the form of multi-dimensional data sets comprising intensity values for each emotional category identifier. There are various options for determining the interim text region emotional data profiles based on the group of individual sentence emotional data profiles within the text region including, but not limited to:

- If there is only one sentence in the text region, the interim text region emotional data profile is that of the sentence.
- The interim text region emotional data profile may be generated based on averaging the intensity values in each emotional category across all the sentence emotional data profiles in the group.
- The interim text region emotional data profile may be generated based on summing the intensity values in each respective emotional category across all the sentence emotional data profiles in the group to generate a multi-dimensional data set of summed frequencies, one summed frequency for each emotional category.
- The most prevailing or dominant sentence emotional data profile from the group may be statistically selected to represent the interim text region emotional data profile.
- The most intense emotion from the group of sentence emotional data profiles from the group may be statistically or absolutely selected to represent the interim text region emotional data profile, such as by selecting the sentence that generates the longest resultant vector in the emotional model 50.
- Using other combinations of statistical events such as medians, comparative statistical means such as excessive deviations from the mean to generate the interim text region emotional data profile form the individual sentence profiles in the group associated with the text region.
- Determining the interim text region emotional data profile based on predictive events, such as taking into account the next region and its starting point. For example, the data profile may be selected based on moving across the affective emotional state circle model 50 if the points were only one or two octants apart to provide an emotional continuum experience.

The output of sub-algorithm 84 is the second set of text regions 86 and their associated respective interim text region emotional data profiles determined or calculated from the individual emotional profiles of the groups of adjacent sentences within the text regions.

_Step 3: Analysing for emotional transitions_

In this embodiment, the region determination algorithm 80 is then configured to apply sub-algorithm 88 to further refine the number of text regions in the second set 86 to generate a final set of text regions 90. This sub-algorithm 88 is configured to analyse the interim text region emotional data profiles of the second set of text regions 86 and further group adjacent text regions having an emotional association based on an emotional-transition threshold or thresholds to generate the final set of text regions 90. As will be explained further below, in this embodiment the sub-algorithm is configured to cast or map or transform the multi-dimensional data set of emotional intensities (or a masked or modified version of the data set) representing the interim text region emotional data profiles into a resultant 2-dimensional vector or coordinate point into the circular reference frame of continuous emotion model 50. The sub-algorithm then compares adjacent resultant vectors or resultant coordinate points of adjacent text regions to determine if an emotional association exists based on an emotional-transition threshold or thresholds. In this embodiment, the sub-algorithm 88 compares adjacent vectors based on change in distance from the origin and/or angular movement between the vectors to determine an emotional association. For example, if the change in distance from the origin and/or angular movement between the vectors is under predetermined thresholds, an emotional association is deemed to exist and the associated text regions combined into a larger text region. If the distance change and/or angular movement between the vectors exceeds the thresholds then an emotional transition is identified, and the adjacent regions are not grouped.

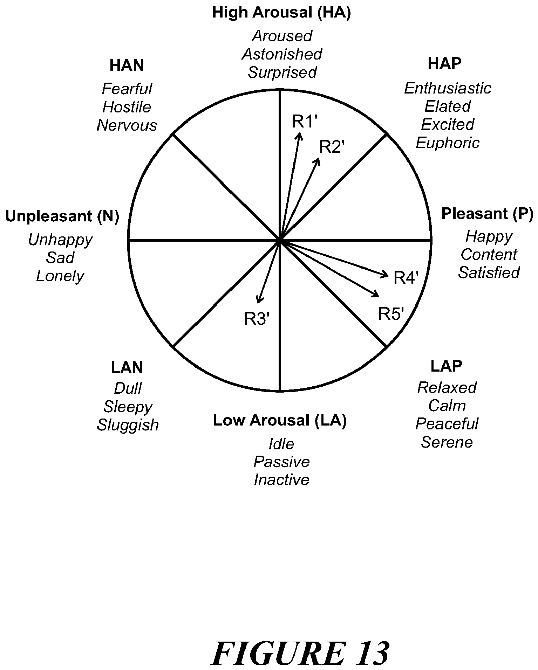

In this embodiment, the sub-algorithm 88 commences progressively from the start of the text onwards and iteratively accumulates interim text portions having an emotional association until an emotional transition is identified, and preceding interim text regions before the transition are grouped as a final text region for the final set. The analysis then repeats through the remaining interim text regions to determine all final text regions. Referring to Figures 12 and 13, an example of this process is shown. Figure 13 shows the resultant vectors of the interim text region emotional data profiles of the text regions of the second set 86 mapped or cast in the emotion model 50. In this example, regions R1' and R2' are deemed to have an emotional association within the thresholds but there is deemed to be an emotional transition ET1 at R3'. As such regions R1' and R2' are grouped into a final region R1". Regions R3' and R4' also do not have an emotional association based on the thresholds generating another emotional transition ET2. As such, R3' is deemed to be a final text region R2''. Regions R4' and R5' are deemed to have an emotional association and will at least form part of the next final region R3'' with any other adjacent subsequent text regions having an emotional association before the next threshold, as the analysis continues.

Optionally, sub-algorithm 88 may also be configured to apply maximum threshold values for the length of the final text regions, to ensure a sufficient frequency of change in audio regions in the soundtrack. The maximum threshold values for the text region lengths may be determined based on word or token counts, or time thresholds, in a similar manner to the minimum length thresholds applied in sub-algorithm 84 above. If sub-algorithm 88 accumulates or groups interim regions together to the extent that the maximum length threshold is breached but no emotional transition is yet identified, the algorithm automatically sets the current group as a final text region, and begins processing the next interim text regions in the same manner to determine the next final text region. Therefore, the maximum threshold provides a control on the size of the final text regions generated, which in turn controls the rate or frequency at which audio region transitions will occur, to prevent the same audio region playing for too long in the soundtrack.

A more detailed example of one particular implementation of the sub-algorithm 88 will be described in the following by way of further explanation.

The sub-algorithm 88 in the third step involves applying a circle movement / distance measurement with a predefined threshold to vectors or points in the emotional model representing the interim emotional profiles of each of the text regions in the second set. If either a change in intensity (the distance from the origin) and/or a change in emotion (the direction of the vector in the unit circle) change beyond a certain threshold between adjacent text regions, those are identified as relevant emotional transitions for defining a new region. Regions that do not meet this threshold are combined together using the combinational steps similar to those applied by sub-algorithm 84 in step 2 of the algorithm 80.

For example, two points in a unit circle, say p1(x,y) and p2(x,y) have a Euclidian distance, defined as distance(p1, p2) = Square root of $((p1.x - p2.x)^2 + (p1.y - p2.y)^2)$. If this distance exceeds a threshold, a text region change is applied, i.e. an emotional transition is identified as existing between the regions represented by the points. Likewise a dot product calculation or similar can be used to determine the angular movement or angular change about or relative to the origin between two resultant vectors or points. If the angular change exceeds a threshold, a text region change is also applied.

The sub-algorithm 88 in this implementation is configured to analyse the change (distance or angle) between adjacent vectors or points in the emotion model 50 based on the following. These definitions apply:

(1) The concept of an 8-dimensional emotion or mood vector. As the continuous emotion model 50 splits the moods into octants, and each octant is determined by a predefined list of words (lexicons), the system defines an octant for a single sentence as the frequencies of the words for each of the 8 octants that occur. If a word is shared between two octants (i.e. a word is applicable to more than one emotional category), then the system divides its count by the number of shared octants. For instance, if the word "livid" applies to octants of "anger" and "excitement" then its contribution to each region is ½ (one occurrence divided by two emotional categories). Each sentence in the system has such a vector.

(2) Each sentence in the system also has a sentiment value for positivity and negativity. In this example embodiment, the sentiment value is generated by a sophisticated sentiment analysis tool or system that takes into account mood changes, modals (like "would" or "could") and negatives ("not excited" meaning the opposite of excited). The sentiment judgement derived by the tool is represented as a single number for each sentence between -1 and 1 indicating a very negative to very positive sentence respectively. As previously described, it will be appreciated that the alternative forms of sentiment values could be generated and used in alternative embodiments.

Following from the above definitions the sub-algorithm 88 is configured to carry out the following steps:

(1) All the vectors (sentence emotional data profiles) of all the sentences in the second set of text regions 86 are summed together to get a set of summed frequencies to represent the interim 8-dimensional emotion vector for the region.

(2) A mask function is applied to this vector. Rather than take all eight values into account, the algorithm focuses on a sub-section of one or more values of the data set with the highest "weight" in the vector. This is best illustrated with an example. In one configuration, the algorithm is configured to evaluate three consecutive values repeatedly from the vector (wrapping around the data set for the values near the end of the vector). These three values are summed together and the sub-set having the maximum weight of the sets is determined. By way of example, if the 8-dimensional emotion vector was [1, 2, 0.5, 0, 0, 0, 1, 0], the "heaviest" section is at [1, 2, 0.5], since these values sum to 3.5, and this is the highest possible combination of three adjacent values inside this vector. In a first configuration, all the other parts of the vector are then set to zero, to avoid any influence on the strength of this vector. The example masked vector then becomes [1, 2, 0.5, 0, 0, 0, 0, 0] in this configuration. In a second configuration, the highest of the three values is selected with the remaining masked to zero resulting in the masked vector becoming [0, 2, 0, 0, 0, 0, 0, 0]. In this second configuration, if two values of the three are equally highest, then those two highest values are selected to represent the vector and all other values are masked to zero, and similarly if all three values are equal. Regardless of the configuration, this masked vector is then used to recalculate the vector's position in the unit circle using the casting formula discussed next.

(3) The conversion of the 8-dimensional vector to a two-dimensional set of circle coordinate goes as follows (similar to the sine /cosine casting previously described).

> (a) Each octant is associated with a 45 degree slice on the unit circle, so Octant 1 is 0 degrees, Octant 2 is 45 degrees, Octant 3 is 90 degrees, and so on.
> (b) The algorithm takes the sum of each Octant's vector value times its degrees, with a cosine for the x, and a sine for the y.

>> (i) Let x = 0.0
>> (ii) Let y = 0.0
>> (iii) For i = 1 to 8
>> (iv) x = x + cosine(degreesForOctant(i) x vector.value[i];
>> (v) y = y + sine(degreesForOctant(i) x vector.value[i];
>> (vi) adjust x and y by some scalar value
>> (vii) return x and y normalized with their lengths if their length was greater than 1.0

(4) The intensity of the region is determined by combining the median of the sentiment values for the sentences of that region with the length of the vector calculated above. This sentiment-median is a value between -1 and 1 (as are all sentiment values) and its absolute value is taken to not affect the direction of the emotion (since the direction of the emotion is independent of the sentiment value). The sentiment value is not what determines the direction, since the sentiment value is only positive and negative sentiment, it cannot change the direction / octant of the emotion since there is no such mapping). In this embodiment, the sentiment value's contribution to the intensity of the region is 50%. Its value is divided by 2 and added to the length of the circle coordinates determined above. It will be appreciated that the weighting of the sentiment value contribution may be altered if desired.

(5) The steps (1)-(4) are repeated for all regions in the second set so as to plot their representative vector or point in the emotion model, for subsequent analysis to determine which regions have an emotional association and/or where the emotional transitions exist based on change in distance and/or angular movement within the model as discussed above.

*Step 4: Optional re-alionment of text region boundaries*

Optionally, the audio region determination algorithm 80 comprises a re-alignment sub-algorithm 92 that is operable to adjust the start and/or end of one or more of the text regions of the final set 90 to align with predetermined reference points within the text according to predetermined alignment rules. In one example, the predetermined reference points may comprise data indicative of paragraph or chapter boundaries, and the start and/or end of one or more of the text regions may be adjusted to align with the closest paragraph or chapter boundary based on predetermined alignment rules. In one configuration, the re-alignment of the start and/or end of the text regions may comprise re-allocating one or more sentences of the text region to an adjacent text region or obtaining one or more sentences into the text region from an adjacent text region.

The purpose of this re-alignment algorithm is to prevent audio regions from crossing at least chapter boundaries in the text, and also paragraph boundaries if possible. Audio regions crossing chapter and paragraph boundaries is undesirable as such boundaries provide a natural end point for a reader. The sub-algorithm 92 is configured to retrieve chapter and paragraph boundary data (i.e. the text positions of such boundaries) and adjusts the start and/or end of the text regions in the final set to start and end on chapter and/or paragraph boundaries. For example, Figure 12 shows regions R1" and R2" R3" of the final set 90 adjusted or re-aligned with at least the chapter boundaries indicated at 96 to generate the re-aligned final set of text regions 94 shown as R1"', R2"', and R3"'.

*Emotional data profiles,for,final text region*

The audio region definition algorithm 80 is configured to determine or generate a respective region emotional data profile for each of the text regions in the final set. The algorithm 80 is configured to generate a region emotional data profile for a text region based on or as a function of the sentence emotional data profiles of the individual sentences within the region. As discussed with regard to sub-algorithm 84 in step 2, the representative emotional data profile can be generated according to various predetermined configurations or rules, depending on requirements. The region emotional data profile is also a multi-dimensional data set of intensity values, e.g. in this embodiment an 8-dimensional vector of intensity values, one for each emotional category. The values in the 8-dimensional vector may be determined based on any of the techniques previously described with respect to sub-algorithm 84 such as averaging the values for the sentence profiles, summing the values form the sentence profiles, selecting a dominant or prevailing sentence profile to represent the region emotional profile, selecting the most intense emotion in the sentence profiles to represent the region emotional profile, or any other suitable technique for extracting a representative region emotional profile from the individual sentence emotional profiles.

In some embodiments, the algorithm 80 may be configured to apply a masking function to the 8-dimensional vector of the emotional data profile of any of the types or configurations described in sub-algorithm 88. For example, the highest sub-set of a predetermined number of adjacent intensity values may be selected to represent the emotional data profile, with the remaining values masked to zero. Alternatively, the highest value or values of the subset may be selected to represent the emotional data profile with the remaining values masked to zero. The number of adjacent values may be three for example as in sub-algorithm 88, although it will be appreciated the number may be varied higher or lower. In further alternative configurations, the masking function may be configured to select the highest intensity value to represent the 8-dimensional vector, with the remaining values masked to zero.

It will be appreciated that the 8-dimensional vector representing the region emotional data profile can be cast as a resultant vector or point into the circular reference frame of the emotion model 50 using the techniques previously described. Therefore, the emotion for the region can be represented by a single resultant vector or point in the continuum of emotions defined by the 2-dimensional emotion model 50 (see Figure 6).

### 2.5 Matching or selection of audio files for defined audio regions

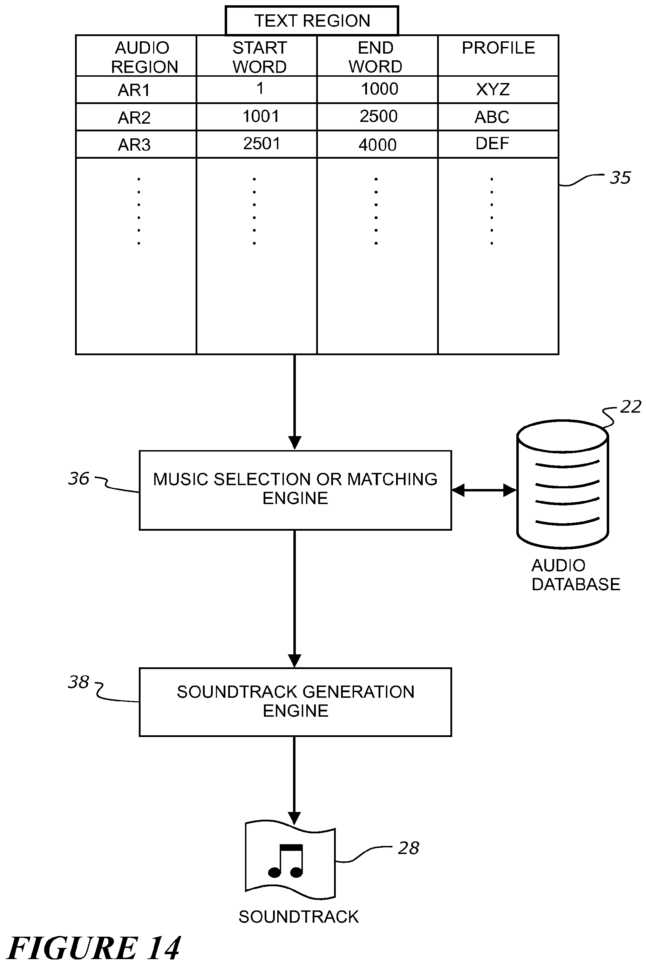

Referring to Figure 14, the music selection or matching engine 36 is configured to receive and process the audio region data generated by the audio region definition engine 34, and select an audio data file for playback in each audio region based on its associated region emotional data profile.

In this embodiment, the automatic creation system has one or more accessible audio libraries or databases 22 that the matching engine 36 can select audio files from. The audio database or databases may be integrated with the creation system and/or the system may access the databases over data network, such as the internet or similar. The audio databases may be private to the creation system and/or 3rd party audio databases or libraries or cloud-based audio streaming services. The audio files are music files in this example. The music files in the database(s) each comprise meta-data or audio file profile information or data representing characteristics of the music, which either directly or indirectly represent the emotion conveyed by the music.

#### Translation or transformation of music meta-data into continuous emotion model representation

In one configuration, matching engine 36 is provided with one or more mapping or translation engines that are configured to map or transform the information in the music file metadata into a format comparable or compatible with the continuous emotion model 50. For example, the mapping or translation engines may map or translate the music metadata into an 8-dimensional emotional data profile, or resultant vector or point in the 2-dimensional circular reference frame of the continuous emotion model. In this configuration, each music file in the database can be mapped into the emotion model 50, and a music file or files for an audio region may be selected based on which mapped music file profiles most closely match to the vector or position represented by the region emotional profile of the audio region. For example, a selection may be based on a predefined angular and/or distance thresholds or proximity threshold between the music file position in the emotion model and the audio region position in the emotion model.

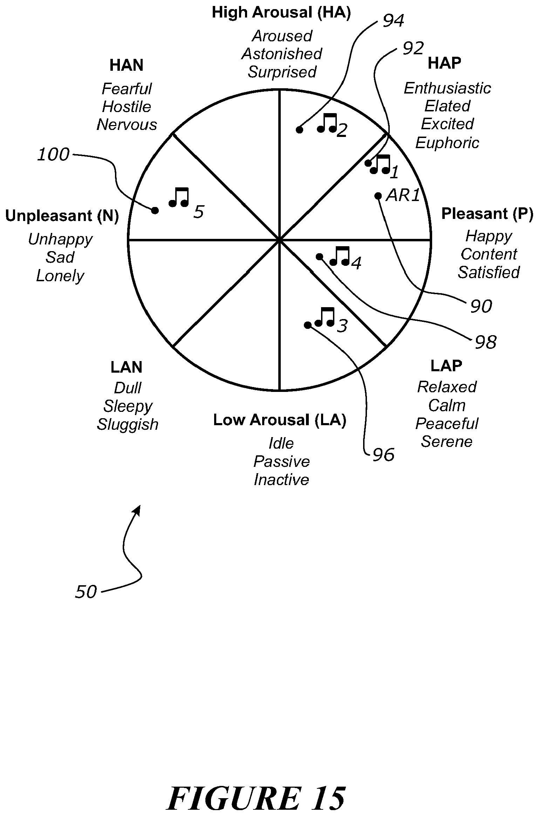

For example, Figure 15 shows the cast 2-dimensional position of the region emotion profile for an audio region AR1 at 90. Five music files 92, 94, 96, 98, 100 have also been mapped into the model 50 from an audio database. In this example, the music file 92 most closely matches the emotion and intensity of the emotion of AR1, and the matching engine would select this music file to playback for that audio region.

In an alternative configuration, the music meta-data, once mapped into an 8-dimensional data set profile, may be compared directly to the 8-dimensional data set profile representing the region emotional profile of the region. In this configuration, the raw multi-dimensional data sets representing the emotional profile of the music file and the region emotional profile of the audio region can be compared for the closest match, without needing to generate and compare singular resultant points or vectors generated from the multi-dimensional data sets. For example, the individual intensity values (absolute or relative) of the multi-dimensional data sets of the audio region and music files may be compared to find the closest match. In some configurations the closest match may be determined based on finding the closest matching one or more dominant intensity values in the data set i.e. matching based on one or more of the most dominant emotional categories in the data set. In other configurations, the data sets may be compared based on the closest overall match of intensity values across all emotional category identifiers represented in the data set.

*Translation of region emotion profiles into music file metadata format*

In another configuration, the matching engine 36 is provided with one or more mapping or translation engines that are configured to map or transform the region emotional data profiles of the audio regions (e.g. the 8-dimensional data sets) into a format or form corresponding to the meta-data categories or emotional profiling categories or characteristics used by the audio library or database for their collection of music files. Each translated region emotional data profile can then be matched to the closest music file or files for selection that have corresponding meta-data.

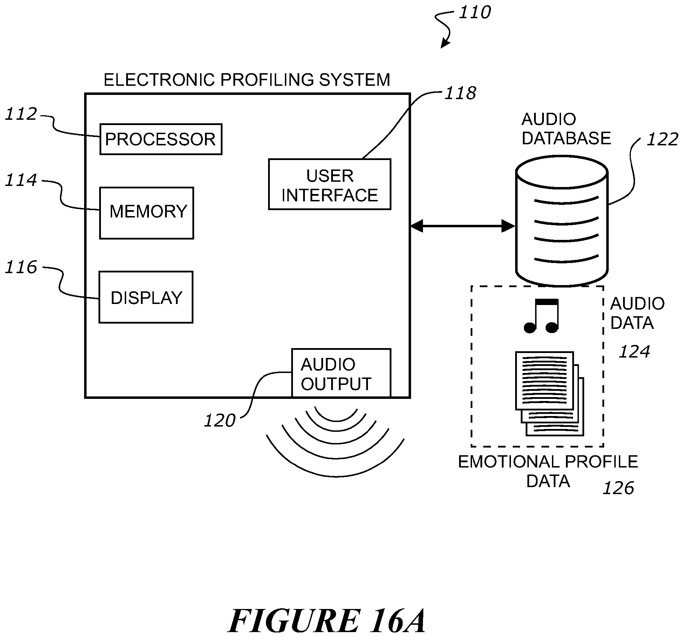

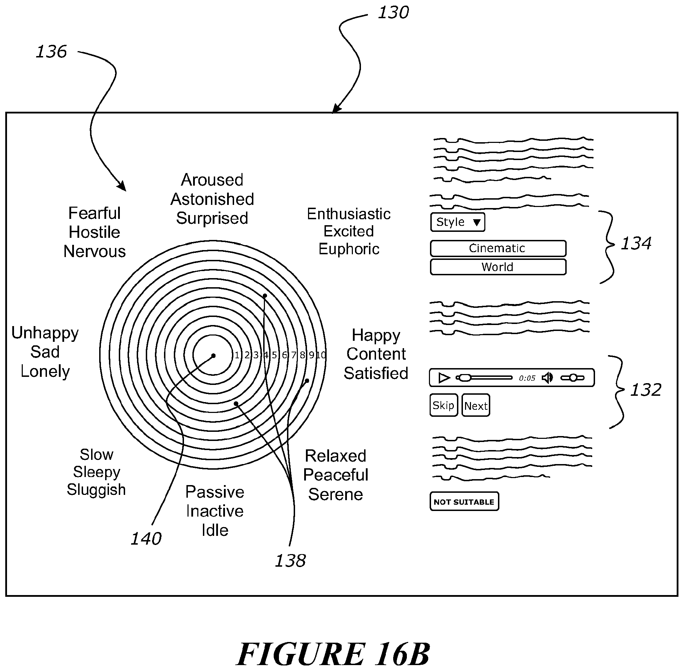

By way of example only, Figures 16A-16C depict the metadata characteristics of an audio database or library. Each music file in the database has a 'genre' characteristic selected from those displayed in Figure 16A, a 'style' characteristic selected from those displayed in Figure 16B, and an 'emotion' characteristic selected from those displayed in Figure 16C. In one configuration, the matching engine 36 is configured to map or translate the region emotional data profile (e.g. 8-dimensional vector) into one of the corresponding 'emotion' categories in Figure 16C of the audio library. By way of example, if a region emotional data profile has a resultant vector that maps into the 'Pleasant' octant of the emotion model 50 (e.g. represented by identifiers 'happy', 'content', 'satisfied', this may be mapped or transformed via a lookup table or similar to the music 'emotion' category of 'Happy-Pleased' in the audio database. As such, a music file having the 'Happy-pleased' metadata emotion characteristic from the audio database will be selected for the audio region.

*Direct matching of region emotion profiles to audio database profiled based on the continuous emotion model*

In another configuration, the matching engine 36 may be operable to select audio files from an audio database without any translation engines. In this configuration, the matching engine 36 is configured to access or communicate with an audio database or databases that comprise audio files having associated metadata or audio profile information that comprises data indicative of an audio emotional data profile in the format that is represented by the continuous emotion model 50. For example, each audio file may be represented by an audio emotional data profile comprising one or more resultant vectors in the continuous emotion model or alternatively a multi-dimensional emotional data profile (i.e. a data set comprising an intensity value for each emotional category identifier) that can be optionally mapped or transformed into the continuous emotion model using techniques previously described. As will be described below, in some configurations the raw multi-dimensional data sets representing the emotional profiles of the audio region and audio files are directly compared for the closest match, and in other configurations the data-sets are cast or transformed into a resultant vector or point in the 2-D emotional model for subsequent comparison for the closest match.

In one configuration, the multi-dimensional emotional data profiles of the audio regions and audio files are compared directly to find the closes match. For example, the individual intensity values (absolute or relative) of the multi-dimensional data sets of the audio region and music files may be compared to find the closest match. In some configurations the closest match may be determined based on finding the closest matching one or more dominant intensity values in the data set i.e. matching based on one or more of the most dominant emotional categories in the data set. In other configurations, the data sets may be compared based on the closest overall match of intensity values across all emotional category identifiers represented in the data set.

In another configuration, the multi-dimensional data sets representing the emotional profile of the audio region and music files are matched based on their singular resultant vector or point as mapped into the 2-D emotional model. In this configuration, each music or audio file in the audio database is represented in the emotion model 50 and a music file or files for an audio region may be selected based on which music file emotion profiles most closely match to the resultant vector or position represented by the region emotional profile of the audio region. For example, a selection may be based on a predefined angular and/or distance thresholds or proximity threshold between the music file position in the emotion model and the audio region position in the emotion model as was described above in regard to Figure 15.

This configuration relies on an audio database in which all the audio files have been profiled in a format corresponding to the continuous emotion model 50. In one embodiment, such a database is created by an electronic profiling system. An embodiment of an electronic profiling system will be described with reference to Figures 16A and 16B.

Referring to Figure 16A, in this embodiment the electronic profiling system 110 may be implemented or accessible on any suitable electronic hardware system or device typically comprising a processor 112, memory 114, display 116, user interface 118 and audio output interface 120. The electronic profiling system may be in the form of software executable or operable on such a system. The software may be an application program locally stored on the hardware system or remotely accessible, such as cloud-based software accessible over an internet browser or similar. The electronic profiling system is connected to or may access over a data communication link an audio database 122 that stores or provides access to a set of audio data files 124, such as music files. The user interface is operable by a user to access and play the music files from the database over the audio output 120, and to then emotionally profile the audio files via a profiling graphical user interface (GUI) presented on the display. The emotional profile input from the user via the profiling GUI is then stored or tagged as emotional profile data 126 against the audio file and stored in the audio database 122 or in a separate database from which it can later be retrieved.

Referring to Figure 16B, an example embodiment of the profiling GUI 130 presented to the user on the display 116 is shown. The profiling GUI 130 enables the user to select music files from the database for profiling or alternatively automatically presents the music files to the user for profiling one by one in a random or predetermined order. An audio playback interface 132 is provided with conventional audio playback controls to enable to the user to play, pause, rewind, fast forward, control volume of playback of the audio track as desired. An optional style interface 134 is provided from which the user may select from a drop-down list one or more 'styles' (e.g. acoustic, rock, cinematic, world, pop, country, blues etc) that they believe apply to the audio track they are listening to, and this style data may also be stored against the meta-data of the audio file.

The primary profiling interface in the profiling GUI 130 is the emotional profiling tool or GUI 136. In this embodiment, the emotional profiling GUI 136 presents a graphical representation of the continuous emotion model 50 of the type previously described with reference to Figure 6 for example, or an variation of that model that matches the model upon which the text has been analysed and emotionally profiled. After listening to the audio file, the user is able to emotionally profile the audio track by registering one or more profile 'dots' 138 on the circular model presented, which correspond to the user's perception of the emotional categories and intensities of such emotions conveyed by the music overall. The profiling dots may be registered or applied by the user via any suitable user interface means, for example clicking a mouse pointer on the displayed model at the appropriate position via a mouse input interface or touch input on the displayed model if a touch screen user interface is provided by the system.

The emotional profiling GUI 136 may be configured to control the number of profile dots the user can apply to each track. In one configuration, the user may only be allowed to apply a single dot, but in other configurations the user may be able to register or apply a plurality or multiple dots as shown in Figure 16B. As will be appreciated in accordance with the previous description of the model, the angular position of a profile dot represents the emotional category or blend of adjacent categories in the continuum of emotions to which the listener perceives the music conveys. The distance from the origin 140 of the dot represents the intensity of that emotion as perceived by the listener doing the profiling, with a distance closer to the origin representing a lower intensity and closer to the boundary or perimeter of the model representing a higher intensity.

Once the user has emotionally profiled the audio track with one or more profile dots, the emotional profile data 126 represented by the one or more profile dots is stored in the audio database 122 or elsewhere against that audio track as previously described for subsequent use by the matching engine in the creation system.

In one embodiment, the emotional profiling of the audio tracks of an audio database using the profiling system 110 described may be carried out by multiple users (profilers). The result is that the audio tracks in the audio database have multiple emotional profiles generated for them, from a range of different listeners. Rather than relying on a single listener to profile the audio tracks according to their perceptions, the multiple emotional profiles generated by multiple or a 'crowd' of listeners can be generated and retrieved for the audio track. In this scenario, the system can be configured to average or otherwise statistically generate an overall emotional profile for the audio track based on the crowd-sourced data from multiple profiling listeners. This provides the ability to remove outliers or extreme profiles and generate a more representative emotional profile for the audio track.

*Other configurable matching engine control parameters - music-selection filters*

The matching engine 36 is configured to primarily select an audio track (e.g. music file) for an audio region based on the closest matching emotional profiles of the audio track and audio region using one or more of the techniques or configurations such as those described above. In addition to the primary emotion matching, the matching engine may be configured to apply one or more music-selection filters to the music selection based on various factors, depending on the meta-data and profile information available for the music files and/or additional profile or information about the text. Various examples of the additional music-selection filters are described below. Any combination of one or more of these music-filters described below could be implemented by the matching engine with the emotional profile matching to select the audio track for each audio region.

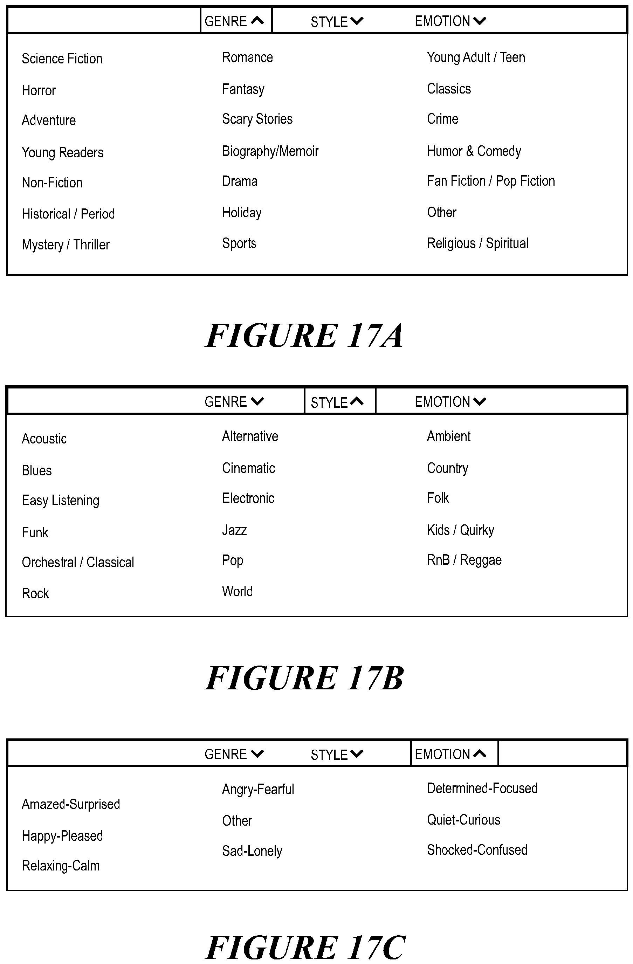

In one configuration, the matching engine is provided with one or more configurable global music-selection filters. The filters may include, but are not limited to, genre music-selection filters and style music-selection filters. For example, the matching engine may be configured manually or automatically to filter the music files for selection based on particular 'genre' and/or 'style' settings or parameters. Referring to the example of Figures 17A-17C, the matching engine may, for example, be configured to apply music-selection filters that requires all music files be selected from a 'genre' that corresponds to the nature of the text (e.g. 'Adventure' if the text is determined to be a fiction adventure novel) and a 'style' such as 'cinematic'. This means the music selection carried out by the matching engine must select a music file for each audio region that is tagged in the 'Adventure' genre and 'cinematic' in style, and which most closely matches the emotional profile of the audio regions. Other operable music-selection filters may include those that dictate to only select from music files that have no lyrics.

It will be appreciated that number of matching or music-selection filters applied may vary depending on requirements and the extent to which the music files or tracks have been classified or profiled. Some of the filters may be manually pre-configured and others may be dynamically configured based on the particular text for which the soundtrack is being created. For example, the system may be configured with a music-selection filter that only selects music files having no lyrics.

The system may be configured to determine or extract additional profile information relating to the text via additional text analysis or external sources to determine additional characteristics of the text. In the context of text that is a book, this may include information such as, but not limited to, genre, setting (place and time), author, writing style and the like. Based on this information, the system may dynamically configure additional text-based music-selection filters to correspond to the additional global profile information relating to the text. For example, the music-selection filters may be configured to only select music files or songs relevant to the setting being conveyed in text so as to avoid a 'rap' song being selected for a romance novel set in the 1900s. Such text-based music-selection filters rely on the audio tracks also being profiled with similar information.

In some configurations, the user-based music-selection filters may also be applied based on the end user or type of user that may be using the automatically created soundtrack. The user-based music-selection filters may be based on user preferences or settings, such as no 'rock' music, or the user prefers 'classical' music to play when reading, or user profile or demographic profile information relating to the user such as, but not limited to, age, gender, nationality and the like. The user profile information may also include previous historical settings relating to the user's ratings of other soundtracks created for similar texts for example.

In some configurations, the matching engine is provided with configurable or self-configuring musical characteristic music-selection filters. The musical characteristic filters may define filters relating to one or more of the spectral or other musical characteristics of the music to be selected for an audio region. By way of example, these filters may define thresholds or filters relating to desired tempo or beats per minute (BPM) characteristics, key change frequencies or other spectral characteristics of the music relating to the audio track's suitability for selection.

In some configurations, the matching engine is provided with configurable playlist music-selection filters. In such configurations, the matching engine accesses a playlist database comprising a collection of one or more playlists of audio tracks that have been pre-selected for the text. For example, in the context of the text representing a fiction book, the author and/or one or more readers of the book may generate playlists of audio tracks (music or songs) which they enjoy listening too while reading the book. This playlist data from multiple sources is stored in a playlist database. In some embodiments, the matching engine may be configured with a playlist music-selection filter that dictates that only audio tracks listed in the crowd-sourced playlist data may be selected for an audio region, i.e. the primary emotional matching performed by the matching engine for an audio region is based on a filtered list of audio tracks from the audio database that correspond to the playlist data for the text. Various types of playlist music-selection filters may be applied. In one form, the playlist filters may specific one or more particular playlists, e.g. the author's playlist only, or the end-users playlist only, or a combination of any one or more playlists, or all playlists associated with the text.

In some configurations, the matching engine is provided with configurable rating or machine learning music-selection filters. In such configurations, the creation system is configured to receive or retrieve rating data from listeners of the synchronised soundtracks. By way of example, the listeners may be provided with a ratings input interface in their soundtrack playback system that enables them to provide rating feedback on the suitability or their rating of an audio track that is playing in the soundtrack for the text they are reading. By way of example only, the rating interface may be a 'thumbs up' or 'thumbs down' GUI interface or any other suitable ratings interface enabling a user to provide ratings feedback as to whether they like or dislike the audio track playing in the soundtrack. The user may for example believe an audio track really enhanced their reading experience for a particular passage in the e-book they are reading and give it a 'thumbs up' rating, or alternatively if give it a 'thumbs down' rating if they thought it was distracting or otherwise not suitable to enhancing their reading experience. The matching engine is configured to receive or retrieve this ratings data from a crowd of listeners and may then be configured to generate dynamic ratings profile data for audio tracks in the database which is either generic or specific to a particular text, or both. The matching-engine is operable to apply one or more ratings music-selection filters based on the ratings data received. By way of example, the ratings filters may dictate that no audio track is to be selected if it has negative ratings data over a predetermined threshold of all ratings received for the audio track, or alternatively the engine may only select audio tracks that have an associated positive rating corresponding to a predetermined threshold. The ratings filters may also be configured to operate on sub-sets of ratings data. For example, the filters may be set to be global (i.e. all ratings for the audio track during its use in a synchronised soundtrack regardless of which text is being read) or they may be set to be text-specific (i.e. only ratings for the audio track when played for the same text being processed are considered). It will also be appreciated that the ratings filters may operate on a subset of the ratings data that are filtered based on user profile or demographic information, such that the filters are only applied based on ratings from a particular group of users. For example, the ratings filters may be set to operate on only ratings data from users in one country, or a particular age group, or only ratings data received from one particular user, such as the end user for which the soundtrack is being created for example. As the ratings data will constantly change as more ratings are received, the ratings filters are dynamic and provide a machine learning function to the matching engine.

The above various music-selection filters may be applied on a global text basis, or may be applied one a more granular or higher resolution basis, such as on a chapter basis. For example, each chapter may have its own global chapter profile filters for the music selection, which overlay the individual audio region emotional profile matching of the individual audio regions within the chapter.

*User tuneable selection system for emotional weighting*

In an embodiment, the automatic creation system comprises user setting or control interface that enables a user to tune the created soundtrack to the type of emotions they would like to amplify or dampen. Suppose a user wasn't interested in hearing "sad" music. A user could define a multiplier (through the control interface, e.g. a displayed graphical user interface) for each of the eight dimensions (e.g. sadness = 0.2, happiness = 1.0, etc). These control parameters for emotion would dampen down any "sadness" events to 20% of their original strength and leave happiness at 100%, for example. Effectively the system would generates a deformed unit circle of the emotion model 50 according to the user's preferences or control setting, where certain spokes of the octants were retracted more than others, thus deforming the shape of circular reference frame. This shape is a user's unique preference defined by an eight dimensional vector with values between 0.0 and 1.0 inclusive, for example.

### 2.6 Optional thematic profiling of text for audio region definition and/or music selection

In the embodiments above, the automatic creation system and algorithms are primarily configured to semantically process the text for the audio region definition (regionalisation of the text, i.e. dividing the text into text regions) and the subsequent audio or music selection based on emotional profiling of the text and audio files. In particular, the audio region definition algorithm defines or identifies text regions within the text based on identifying emotional transitions in the text or emotional associations between adjacent text segments (e.g. sentences). The system then calculates or determines an overall emotional profile for each text region as a function of the emotional profiles of the text segments (e.g. sentences) with the text region, and the overall text region emotional profile is used in the music selection algorithm that selects an audio file for playback alongside the reading of that text region at least partly based on matching of the text region emotional profile to a corresponding audio or music file having a similar emotional profile.

In some embodiments, the automatic creation system may optionally further process the text for thematic profiling in addition to emotional profiling. The thematic profiling may be implemented for the audio region definition stage, music selection or matching stage, or both. Examples of the thematic profiling will be explained below.

In a first alternative configuration, the semantic analysis engine 32 may be configured to process each text segment (e.g. sentence) for emotional profiling and thematic profiling. As previously explained, the emotional profiling is based on a continuous emotion model and based on parsing the text relative to a set of emotional lexicons 60, and generating a segment emotional data profile in the form of a multi-dimensional data array representing the emotional profile of the segment (e.g. sentence) relative to each emotional category identifier (each of which has a respective 'emotional' lexicon). In this first alternative configuration, the semantic analysis engine 32 is further configured to process or profile the text segments (e.g. sentences) relative to a set of one or more thematic values or judgements or characteristics defined by respective 'thematic' lexicons. The thematic characteristics may represent any desired thematic judgements including by way of example only, but not limited to:

- Story genres: drama, romance, thriller, adventure, sci-fi etc
- Scenes: nature, urban, etc
- Writing styles: Victorian, contemporary, whimsical, speech, etc
- Other: curious, fight, hope, romantic, sad, scary, sophisticated, weird

Each one or more thematic judgements or thematic category identifiers defining the thematic profiling has an associated thematic lexicon of words or word concepts that are associated with the thematic category identifiers, similar to the emotional lexicons 60 associated with the emotional category identifiers previously described. Like the emotional lexicons, each thematic lexicon may simply comprise a list of words or word concepts, or a list of words or word concepts in which each word has one or more additional lexicon attribute values, such as a weighting value and syntactic characteristic identifier (in a similar format to the emotional lexicons). By way of example only, a portion of the Romance thematic lexicon list may contain words or words concepts like the following:

- ...
- handsome,j,1.0
- heart's desire,idiom,1.0

- heavenly,j,0.8
- helpful,j,0.4
- hot,v,1.0
- hot stuff,idiom,1.0
- huggable,idiom,0.7
- hunk,n,1.0
- hunky,j,1.0
- ....

And the by way of example, a portion of Nature thematic lexicon list may contain words or word concepts like the following:

- ...
- peak,n,1.0
- pinnacle,n,1.0
- planet,n,1.0
- plant,n,1.0
- plant,v,1.0
- polar bear,n, 1.0
- ...

In the above examples, each word or word concept comprises a weighting value (in this example a value between 0 and 1) which reflects how strongly it reflects the thematic category of the lexicon, and a syntactic identifier representing the part of speech or whether it is an idiom for example. In this example, n = noun, v = verb, j = adjective, idiom = idiom etc.

In this configuration, the semantic engine is configured to process or parse the text based on both the emotional lexicons for emotional profiling and the thematic lexicons for thematic profiling of the text segments. The thematic profiling based on the thematic lexicons may be undertaken in the same manner as previously described with respect to the emotional lexicons. The output of the semantic engine is that each text segment (e.g. sentence) is provided with an emotional and thematic data profile, which may be in the form of a multi-dimensional data set or array of values or scores, each value or score in the data set representing or corresponding to a respective emotional category identifier or thematic category identifier. By way of example, if there are 8 emotional category identifiers (and therefore 8 emotional lexicons), and 10 thematic category identifiers (and therefore 10 thematic lexicons), then each text segment will have an 18-value emotional and thematic data profile.

In this first alternative configuration, the audio region definition engine is configured to receive the text analysis data from the semantic engine for processing to identify and define the text regions for the audio regions of the soundtrack. In this configuration, the text analysis data comprises the emotional and thematic data profiles of each of the text segments (e.g. sentences) in the text. The audio region definition engine is then configured to process those text segments and associated emotional and thematic data profiles to identify text regions of multiple adjacent text segments (e.g. sentences) that have an emotional and/or thematic association or otherwise segment the text into text regions based on identifying emotional and/or thematic transitions. It will be appreciated that the audio region definition engine may operate in a similar manner to that previously described with respect to emotional profile data when processing the additional thematic profile data for thematic association or transitions. In one configuration, the emotional profile data may be processed separately to the thematic profile data, and then text regions may be defined based on a function of the emotional association or transition data and thematic association or transition data. In some embodiments, the emotional data may be configured to have a higher weighting or take precedence over the thematic data when defining the text region boundaries, or vice versa, or each may have equal weighting. In other configurations, the emotional and thematic profile data of each text segment may be processed in aggregate form without distinction between emotion and theme, i.e. each text segment may be compared to adjacent text segment based on the overall emotional and thematic association or for overall emotional and thematic transitions. It will be appreciated by a skilled person that the thematic profile data may be processed in a similar manner as the emotional data profiles using similar algorithms.

In this first alternative configuration, the output of the audio region definition engine is a set of defined text regions for which audio regions will be created, and each text region not only having text region emotional profile but a text region emotional and thematic data profile. In this configuration, the emotional and thematic data profile of each text region is defined as a function of the emotional and thematic data profiles of the individual text segments (e.g. sentences) within each text region, using similar techniques as described previously with respect to the emotional profiling.

In this first alternative configuration, the music matching or selection engine is modified to take into account the additional thematic profiling of the audio regions when selecting a music track or audio file for each audio region.

The same selection/matching processes may be utilised as described previously. For example, the emotional and thematic profile of each audio region may be translated/transformed into a format comparable to the emotional and/or thematic profiling of audio files in the audio database, or the audio profile data of the audio files in the database may be converted into a format comparable to the audio region emotional and thematic profiles, so that a comparison can be made to provide music or audio file candidates for selection for each region based on closest matching profiles, as previously described. In yet other configurations the audio or music in the audio database may be profiled in a format corresponding to the audio region emotional and thematic profiles and therefore no translation/transformation into different formats may be required in such configurations. It will be appreciated that the rules defining which audio files have a profile that matches most closely to the audio region profiles may dictate that matching may be weighted in favour of emotion over thematic, or vice versa, or no distinction such that the overall closest match is sufficient.

In summary, the first alternative configuration implements additional semantic profiling of the text for thematic judgements based on thematic category identifiers and associated thematic lexicons for the audio region definition engine, and also utilised the additional thematic profiling for music selection for the defined audio regions.

In a second alternative configuration, the thematic profiling of the text may simply be applied after the audio region definition algorithms have completed, such that the thematic profiling is utilised in the music or audio matching or selection phase of the automatic creation only. In this second alternative configuration, the semantic engine and audio region definition engines execute as previously described based on the emotional profiling only. However, the output of the audio region definition engine is the defined text and audio regions and their associated emotional profile data. At this point, each of the text regions may be subjected to thematic profiling based on the thematic lexicons previously described in the first alternative configuration, and therefore each text region emotional profile is augmented with additional thematic profile data before entering the music selection or matching phase of the system. For example, each text region is parsed with respect to one or more thematic judgment categories and associated thematic lexicons and additional thematic scores or profile values are added to the text region and audio region profile to generate an emotional and thematic data profile for each text region. For example, if the text in the text region is parsed relative to 10 additional thematic categories, then the multi-dimensional emotional data profile of 8 emotional data values or scores, is expanded with 10 additional thematic values or scores. The resulting audio regions and their associated emotional and thematic data profiles are then input to the music selection and matching engine for processing and selection of a suitable music of audio track for each audio region in a manner described with respect to the first alternative configuration of the system.

In summary, the thematic profiling described above in the first and second alternative configurations may be optionally applied at both the semantic analysis and audio region definition stages/processing and the music selection or matching stage/processing as in the first alternative configuration, or just at the music selection or matching stage as in the second alternative configuration.

### 2.7 Soundtrack generation engine

Reverting to Figure 14, the soundtrack generation engine 38 of the system is configured to receive the audio region data from the audio region definition engine and music selection data from the matching engine. This received data collectively defines the audio regions (including their respective start text position and stop text positions) and the audio file information indicative of the audio or music file or files selected for playback in that audio region of the soundtrack. The soundtrack generation engine may also be configured to generate additional audio playback effect data for one or more of the audio regions based on preconfigured rules or dynamically. The playback effect data may for example define any one or more of the following audio playback effects or settings:

- transitional playback effects between audio regions based on configurable predefined rules such as, but not limited to cross-fade, fade-in, and/or fade-out effects for the playback of the audio data file in each audio region, musical key or harmonical compatibility, and/or
- looping settings to define how the audio data file should loop should its duration be shorter than the playback duration of its associated audio region during playback, and/or
- offset start and/or stop settings that are configured to start and/or stop playback of an audio file (e.g. music file) for an audio region at offset playback time positions within the audio file relative to the start and/or end times that define the conventional playback duration of a music file. For example, the settings may be configured to initiate playback of the music file from 30seconds into the audio track playback, and/or cease 30seconds before the natural end point in the playback of the audio track. In some embodiments, the offset start and/or stop time settings may be configured to be selectively ignored or enforced, depending on the playback device, the particular music track, the particular source of the audio or music (e.g. streaming music service), profile or subscription status of end user, and/or or territory in which the soundtrack is played.

The soundtrack generation engine 38 is configured to process the received data into a soundtrack data file format suitable for playback by a soundtrack playback system or engine. The soundtrack data file may define the audio regions and audio file for playback in each audio region, along with any additional playback effect data that may have been configured.

The soundtrack data file or files may comprise the actual audio files or links to audio file sources containing the audio files for retrieval and playback (whether by download or streaming). By way of example only, the soundtrack generation engine may generate a soundtrack data file of the type described in WO2013/015694. In one configuration, the soundtrack may be configured to comprise only audio regions of music files, although the soundtrack may also comprise other layers such as an ambience layer or sound effect layer that comprise ambience or sound effect audio regions that are either automatically configured or manually configured.

*Pre-rendered and On-demand/Real-time generated soundtracks*

In one configuration, the automatic creation system is operable to process the desired text and generate a 'pre-rendered' soundtrack data file for storage. This pre-rendered soundtrack can later be delivered to end-users for playback on a suitable soundtrack playback system while they are reading the associated text, as will be described later.

In another configuration, the automatic creation system is operable to generate and deliver soundtracks on-demand or in real-time for an end user for a particular text upon request. In one embodiment, the automatic creation system is configured to process the text or at least a portion of the text in real-time and progressively generates the corresponding soundtrack for delivery (e.g. streaming) to the end user. In another embodiment, the automatic creation system may be configured to retrieve the text emotional profile map or audio region definition data for the text associated with the soundtrack request from a database, and then operates the remaining modules of the creation system to generate the required soundtrack for delivery to the end user. In this embodiment, the system takes advantage of pre-processing of the text that may have already been carried out by the text analysis and/or audio region definition engines. For example, the text of a catalogue of books may be analysed by text analysis and/or audio region definition engines and associated text emotional profile and/or audio region definition data may be pre-generated and stored, ready for subsequent retrieval and input into on-demand/real-time operating music-selection and matching engines for the delivery of an on-demand soundtrack. A benefit of this approach is that the on-demand soundtrack created can utilise the latest up-to-date database audio tracks and/or particular user preferences (e.g. user-based music-selection filters), but doesn't need to carry out the text analysis.

*2.8 Any text, any where*

The automatic soundtrack creation system can create a soundtrack for playback for any type of text. The embodiments above are described in the context of generating a soundtrack for books, such as an e-book, but the creation system can be applied to text extracted from any source, whether fiction books, non-fictions books, publications, articles, professional documents, marketing materials, internet literature or text, or the like.

In one embodiment, the automatic soundtrack creation system may be in the form of a browser plug-in or webpage widget that is configured to generate a soundtrack for the text presented on a webpage, by processing the webpage text as described above. In another embodiment, the automatic soundtrack creation system may be implemented as a plug-in or Application Programing Interface (API) for 3rd party software such as word processing or presentation (e.g. slide-show) software programs, and the API may be configured to enable the text in the word processing or presentation documents to be processed and a suitable soundtrack generated. In yet another embodiment, the automatic soundtrack creation system may be configured to generate a soundtrack for retail stores, by processing text describing the retail store and generating a suitable soundtrack for playback in store.

*2.9 Playback systems for of automatically created soundtrack*

The soundtracks may be delivered to an end user using any suitable method. The soundtracks and their associated audio track files may be entirely downloaded in advance of playback, or streamed from a server or the cloud progressively, and this applies to both pre-rendered soundtrack and those generated on-demand/real-time.

The automatically created soundtrack may be played via any suitable system that is configured to synchronise the playback of the configured audio regions with a user's reading of the text, such that the audio regions are played back when the user is reading their corresponding text regions in the text. Typically, the playback systems can detect the user's reading speed and/or monitor their reading position in the text and synchronise playback of the audio regions accordingly.

The playback systems are also configured to process any additional audio playback effect data associated with the audio regions of the soundtrack and control playback based on that data, such as transitional playback effects, looping settings, and offset start and/or stop settings as described above. As previously described, in some embodiments the offset start and/or stop settings may be configured to be selectively ignored or enforced by the playback device. In some embodiments, the selection to ignore or enforce the offset start and/or stop settings may be automatically determined based on one or more factors such as, but not limited to, the type of playback device, particular music track being played, the particular source of the audio or music (e.g. streaming music service), profile or subscription status of end user, and/or or territory in which the soundtrack is played. In other embodiments, the soundtrack playback device may be configured with pre-configured or pre-determined offset start and/or stop settings that it applies to the soundtrack audio files as they are downloaded or streamed to the device for playback. For example, the playback device may be configured to apply an offset start and/or stop playback settings to one or more of the audio or music files of the audio regions such that the music or audio track commences playback and/or ceases playback at an offset start and/or stop times relative to its natural start and stop times that define is actual natural playback duration. The settings may be applied to all audio regions or a selected number of regions based on one or more factors, such as those described above.

By way of example only, any one or a combination of the soundtrack playback or delivery systems and/or modules described in patent publications WO2010/002275, WO2013/015694, or US2015/0025663, which are incorporated by reference, may be utilised for the soundtrack playback, depending on the nature of the soundtrack generated for playback. By way of further explanation only, some examples of particular playback systems are provided below.

*Example one - soundtrack playback system for electronic-text*

By way of example only, a playback system will be described below in the context of a soundtrack configured for playback with an electronic text (such as an e-book or similar).

Various soundtrack playback systems may be used for displaying the electronic text and controlling playback of the associated soundtrack, or for simply controlling playback of the soundtrack with the text being read via another application program or device. The soundtrack playback system may be implemented on various user hardware devices, including portable consumer electronic devices such as smartphones, tablets, AI Assistants/devices and dedicated e-reader devices or personal computers, whether desktop or laptop. In some configurations, the soundtrack data file or files, including all the audio tracks, may be entirely downloaded in advance and stored locally on the user device before playback can commence. In some embodiments, the soundtrack and audio track files are combined with the electronic text file as a single multimedia data file for download and playback. In other configurations, the soundtrack data file may be downloaded on the user device and the audio track files may be streamed individually or in batches from a remote database (e.g. the 'Cloud') during playback, such as described in patent publication US2015/0025663, which is incorporated by reference.

In some configurations, the user playback system processes the soundtrack data file and co-ordinates playback of the locally stored and downloaded audio track files or the incoming streamed audio track files in accordance with a reading position counter or variable that estimates the user's current reading text position in the electronic text (e.g. word they are currently reading) or otherwise synchronises the playback timing based on the user's reading speed. The accuracy of the user reading speed variable impacts on the accuracy of the synchronization of the soundtrack playback. In some forms, the reading speed variable is adjusted manually by the user, and in other forms the reading speed variable may be calculated and adjusted automatically from each page turn based on the number of words in the page and the time required to read the page.

By way of further explanation, the soundtrack playback system is configured to maintain a user reading position variable indicative of the user's expected reading position within the electronic text and trigger playback of the audio regions defined in the soundtrack data file based on this user reading position variable, and may operate in a similar manner to the soundtrack playback module described in WO2013/015694 or US2015/0025663. By way of example, if the audio regions of the soundtrack are defined by start and stop positions relating to a word index or count as described above, the user reading position variable may be a counter corresponding to the estimated word in the electronic text that the user is reading. The counter may then increment at a rate at least partly based on a configurable reading speed variable representing the user's reading speed. The counter may also be arbitrarily or periodically updated to the user's actual reading position by various user interaction or user input, including page turns, scrolling, arbitrary reading position update inputs such as the user clicking a mouse cursor on the current word they are reading or tapping (in the case of a touch screen display) on the current word they are reading, or other such means for updating the user reading position variable.

*Example two - soundtrack playback system for 'detached' soundtrack, e.g. particularly for printed books*

By way of another example, soundtrack playback systems for text in the form of a printed text (e.g. paper book) will be described. As described above, the automatic soundtrack creation system can create soundtracks for text from any source, including printed text. In another embodiment, a soundtrack playback system may be provided in the form of an application program or website interface accessible by an end user on a suitable electronic device. The soundtrack playback system comprises an interactive GUI for browsing a database or catalogue of book and/or soundtrack titles for which the text has been pre-processed by the automatic soundtrack creation system to generate a pre-rendered soundtrack or alternatively the text emotional profile map and/or audio region definition map data from which a soundtrack may be created on demand or in real-time.

The user may be reading a particular paper book, and want to listen to the associated automatically created soundtrack, so accesses the soundtrack application program, browses or searches for the book title in the catalogue via the GUI, and then selects the soundtrack associated with the book for playback. For some book titles, the database will comprise a pre-rendered soundtrack or alternatively text emotional profile map and/or audio region definition data from which a soundtrack can be created on demand by the soundtrack creation system, and which can be customised to user preferences based on user-based music-selection filters or other filters. For other book titles, no soundtrack data may be present in the database, and in such situations the system may be configured to retrieve the associated electronic text for the book title from one or more text sources over a data network or data communication link (e.g. electronic book or text libraries or databases or subscription services) and automatically create a soundtrack using the method previously described for the book, and deliver the generated soundtrack to the user for playback.

The application program GUI is provided with audio playback controls (play, pause, volume etc) the soundtrack playback may be synchronised with the user's reading position in their book by the user selecting the current chapter or page they are reading or otherwise providing reading positional information to the soundtrack playback application via a user interface in the GUI.

The soundtrack playback application program for 'detached' soundtracks is also applicable to electronic texts such as e-books. Again, the user may be reading their e-book on an electronic user device or e-Reader device and want to play an associated soundtrack, so accesses the separate soundtrack playback application program (either on the same or a separate electronic device), and selects the soundtrack associated with the e-book title for playback as described above for the printed books scenario, or alternatively inputs identification data for the e-book such that the system can retrieve the associated electronic text of the e-book and automatically generate a soundtrack as described above. In this configuration, the reading position of the user may be extracted from the e-book reader program by the soundtrack application program via an API or similar to enable the playback position of the soundtrack to be synchronised to the user's reading position.

In alternative embodiments, it will be appreciated that the soundtrack application program need not necessarily have an interactive GUI for the user to interface with. In alternative embodiments, the soundtrack application program may be executed or implemented by an Artificial Intelligence (AI) assistant or device based on voice commands for example. In such configurations, the AI assistant may receive or detect input in the form of voice commands from a user instructing the AI assistant to retrieve and playback a soundtrack for a book they are reading (whether printed or e-book). The AI assistant processes these instructions, and searches the soundtrack catalogue as before and requests the soundtrack for playback for the book the user is reading. The AI assistant may playback the soundtrack over its own audio output speakers or channel the soundtrack for playback over another device having audio playback capability. The AI assistant may also receive voice commands from the user indicative of their reading position in the book or may automatically retrieve their reading position in the case of an e-book to synchronise playback and/or may also receive voice commands for audio playback controls (e.g. play, pause, volume etc).

In any of the above embodiments, the soundtrack application program may be configured to receive any suitable form of input data indicative or identifying the book or e-book the user is reading, to enable subsequent retrieval and/or generation and delivery of the associated soundtrack. For example, as alternatives to an operable book title selection GUI or voice commands, the user may operate their electronic device to scan a machine-readable code (e.g. barcode or QR code or the like) associated with or printed on the book or e-book and which contains identification or bibliographical information relating to the book (e.g. data indicative of the title and author or publication reference number or code for example), or alternatively may capture a digital photo or image of the cover or other portion of the book which is then processed to identify the book. This input data is processed to identify the book, which then enables the associated soundtrack to be retrieved or generated as above, and delivered to the user for playback.

### 3. General

Embodiments of the invention may be implemented by hardware, software, firmware, middleware, microcode, or any combination thereof. When implemented in software, firmware, middleware or microcode, the program code or code segments to perform the necessary tasks may be stored in a machine-readable medium such as a storage medium or other storage(s). A processor may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

In the foregoing, a storage medium may represent one or more devices for storing data, including read-only memory (ROM), random access memory (RAM), magnetic disk storage mediums, optical storage mediums, flash memory devices and/or other machine readable mediums for storing information. The terms "machine readable medium" and "computer readable medium" include, but are not limited to portable or fixed storage devices, optical storage devices, and/or various other mediums capable of storing, containing or carrying instruction(s) and/or data.

The various illustrative logical blocks, modules, circuits, elements, and/or components described in connection with the examples disclosed herein may be implemented or performed with a general purpose processor, a digital signal processor (DSP), an application specific integrated circuit (ASIC), a field programmable gate array (FPGA) or other programmable logic component, discrete gate or transistor logic, discrete hardware components, or any combination thereof designed to perform the functions described herein. A general purpose processor may be a microprocessor, but in the alternative, the processor may be any conventional processor, controller, microcontroller, circuit, and/or state machine. A processor may also be implemented as a combination of computing components, e.g., a combination of a DSP and a microprocessor, a number of microprocessors, one or more microprocessors in conjunction with a DSP core, or any other such configuration.

The methods or algorithms described in connection with the examples disclosed herein may be embodied directly in hardware, in a software module executable by a processor, or in a combination of both, in the form of processing unit, programming instructions, or other directions, and may be contained in a single device or distributed across multiple devices. A software module may reside in RAM memory, flash memory, ROM memory, EPROM memory, EEPROM memory, registers, hard disk, a removable disk, a CD- ROM, or any other form of storage medium known in the art. A storage medium may be coupled to the processor such that the processor can read information from, and write information to, the storage medium. In the alternative, the storage medium may be integral to the processor.

One or more of the components and functions illustrated the figures may be rearranged and/or combined into a single component or embodied in several components without departing from the invention. Additional elements or components may also be added without departing from the invention. Additionally, the features described herein may be implemented in software, hardware, or combination thereof.

In its various aspects, the invention can be embodied in a computer-implemented process, a machine (such as an electronic device, or a general purpose computer or other device that provides a platform on which computer programs can be executed), processes performed by these machines, or an article of manufacture. Such articles can include a computer program product or digital information product in which a computer readable storage medium containing computer program instructions or computer readable data stored thereon, and processes and machines that create and use these articles of manufacture.

The foregoing description of the invention includes preferred forms thereof. Modifications may be made thereto without departing from the scope of the invention as defined by the accompanying claims.

**Claims**

1. A method of automatically generating a digital soundtrack intended for synchronised playback with the reading of an associated text, the soundtrack comprising one or more audio regions configured for playback during corresponding text regions of the text, the method executed by a processing device or devices having associated memory, the method comprising:

   (a) receiving or retrieving raw text data representing the text into memory;
   (b) applying natural language processing (NLP) to the raw text data to generate processed text data comprising token data that identifies individual tokens in the raw text, the tokens at least identifying distinct words or word concepts;
   (c) applying semantic analysis to a series of text segments of the processed text data based on a continuous emotion model defined by a predefined number of emotional category identifiers each representing an emotional category in the model, the semantic analysis being configured to parse the processed text data to generate, for each text segment, a segment emotional data profile based on the continuous emotion model;
   (d) identifying a series of text regions comprising a text segment or a plurality of adjacent text segments having an emotional association by processing the segment emotional data profiles of the text segments with respect to predefined rules, and generating audio region data defining the intended audio regions corresponding to the identified text regions, each audio region being defined by a start position indicative of the position in the text at which the audio region is to commence playback, a stop position indicative of the position in the text at which the audio region is to cease playback, and a generated region emotional profile based on the segment emotional profiles of the text segments within its associated text region;

(e) processing an accessible audio database or databases comprising audio data files and associated audio profile information to select an audio data file for playback in each audio region, the selection at least partly based on the audio profile information of the audio data file corresponding to the region emotional profile of the audio region, and defining audio data for each audio region representing the selected audio data file for playback; and

(f) generating soundtrack data representing the created soundtrack for playback, the soundtrack data comprising data representing the generated audio regions and audio data associated with those audio regions.

**2.** A method according to claim 1 wherein the continuous emotion model is further defined by lexicon data representing a set of lexicons for the emotional category identifiers, each lexicon comprising data indicative of a list of words and/or word concepts that are categorised or determined as being associated with the emotional category identifier associated with the lexicon.

**3.** A method according to claim 2 wherein each word or word concept in each lexicon has one or more associated lexicon attribute values or identifiers, and preferably wherein each word or word concept has a weighting value representing how strongly the word or word concept represents the emotional category identifier of the lexicon, and a syntactic value or identifier representing the part of speech or type of word or word concept.

**4.** A method according to claim 2 or claim 3 wherein applying semantic analysis to the processed text data comprises generating segment emotional data profiles that represent for each emotional category identifier the absolute count or frequency of tokens in the text segment corresponding to the associated lexicon.

**5.** A method according to any one of claims 2-4 wherein each segment emotional data profile is generated in the form of a multi-dimensional data set comprising a plurality of count or frequency values, one for each emotional category identifier, and wherein the count or frequency values are based on the number of tokens in the text segment corresponding to or matching to their lexicon associated with an emotional category identifier, and preferably wherein the multi-dimensional data sets of the segment emotional data profiles are multi-dimensional representations of the emotional profile of the text segments, each emotional category identifier representing a distinct dimension within the continuous emotion model.

**6.** A method according to claim 5 wherein the generated segment emotional data profiles comprise a multi-dimensional data set comprising absolute count values or frequency values for each emotional category identifier, and preferably wherein the absolute count values or frequency values of the multi-dimensional data set represent or are indicative of the absolute intensity of the text segment for each emotional category identifier.

**7.** A method according to claim 6 wherein the method further comprises generating baseline statistical values for each emotional category identifier across the entire text, and normalising or scaling the segment emotional data profiles based on or as a function of the generated baseline statistical values to generate relative segment emotional data profiles.

**8.** A method according to any one of the preceding claims wherein the continuous emotion model comprises a 2-dimensional circular reference frame defined by a circular perimeter or boundary extending about a central origin, with each emotional category identifier represented by a segment or spoke of the circular reference frame to create a continuum of emotions.

**9.** A method according to any one of the preceding claims wherein identifying text regions comprises identifying reference text segments that represent emotional transitions in text based on predefined emotional-change threshold or thresholds, and defining the text regions relative to those reference text segments, and/or wherein identifying text regions comprises defining all text segments as an initial set of text regions, and iteratively grouping adjacent text segments into a set of larger final text regions based on analysis of the segment emotional data profiles and/or other predefined rules.

**10.** A method according to any one of the preceding claims wherein identifying text regions comprises:

(i) defining a first set of text regions of one or multiple adjacent text segments by grouping text segments with neutral segment emotional data profiles with adjacent non-neutral segment emotional data profiles;
(ii) reducing the first set of text regions into a smaller second set of text regions based on grouping at least some adjacent text regions from the first set into larger text regions until all the text regions in the second set reach a predetermined size threshold;

(iii) generating or determining an interim text region emotional data profile for each of the larger text regions in the second set based on the individual segment emotional data profiles of the segments within the region;

(iv) analysing the interim text region emotional data profiles of the second set of text regions and further grouping adjacent text regions having an emotional association based on an emotional-transition threshold or thresholds to generate a final set of text regions; and

(v) generating or determining a text region emotional data profile for each of the text regions in the final set based on the individual segment emotional data profiles of the text segments within the region and/or the interim text region emotional data profiles.

11. A method according to any one of claims 1-8 wherein the method further comprises applying semantic analysis to the processed text based on one or more thematic category identifiers having associated thematic lexicons to generate segment thematic profiles for the text segments, and preferably wherein the method comprises: identifying a series of text regions each comprising a text segment or plurality of text segments having an emotional association and/or thematic association based on processing the segment emotional and thematic data profiles with respect to predefined rules; and generating, for each identified text region and its associated audio region, a region emotional and thematic data profile based on the emotional and thematic profiles of the text segments within the text region.

12. A method according to any one of the preceding claims wherein the method further comprises processing the identified text regions to generate a thematic data profile for each region based on one or more thematic category identifiers having associated thematic lexicons, and generating a region emotional and thematic data profile for each text region and its associated audio region.

13. A method according to claim 11 or claim 12 wherein the method comprises processing the accessible audio database or databases to select an audio data file for playback in each audio region based at least partly on the audio profile information of an audio data file corresponding or matching closely to the region emotional and thematic profile of the audio region.

14. A method of automatically generating a digital soundtrack intended for synchronised playback with the reading of an associated text, the method executed by a processing device or devices having associated memory, the method comprising:

syntactically and/or semantically analysing the text at a text segment level to generate an emotional profile for each text segment at least partly based on scanning the word or word concepts in the text segment relative to a predefined number of emotional category lexicons;

analysing the emotional profiles of the text segments to group those having an emotional association into larger text regions of multiple adjacent text segments; and

generating a soundtrack for the text comprising audio regions that are configured for playback during the corresponding text regions of the text, and wherein the audio configured or selected for playback in the audio regions is based on or is a function of the emotional profiles of the group of text segments within the respective associated text regions.

15. A method of automatically generating a digital soundtrack intended for synchronised playback with the reading of an associated text, the method executed by a processing device or devices having associated memory, the method comprising:

identifying emotional-transition points in the text based on syntactically and/or semantically analysing the text in the context of a continuous emotion model;

defining a series of audio regions for the soundtrack based on the identified emotional-transition points, each audio region corresponding to an associated text region in the text;

selecting an audio file or files for playback in each audio region based on an emotional profile determined for its associated text region; and

generating a soundtrack for the text based on the configured audio regions and selected audio files.

Lorem ipsum dolor sit amet, felis sed aliquam, tristique wisi ad metus curae et, tortor nulla cum vel libero vivamus sodales, justo

AMBIENCE 1

EFFECT 1

EFFECT 2

ultrices mattis ullamcorper vulputate, nascetur non eget a. Quam quisque ipsum cursus dolor mauris dictum, dui suspendisse gravida

EFFECT 3

MUSIC 1

AMBIENCE 2

in etiam nisl, quos lorem ipsum porttitor, aliquam quam elit vulputate fusce ac dui, curae nisl. Ac a semper vestibulum quisque,

AMBIENCE 3

dictum odio nam, duis eros quae nibh arcu tristique, amet nibh augue volutpat dolor mauris.

EFFECT 4

EFFECT 5

Elit corrupti fusce quam urna ligula. Libero dolor libero curabitur, eu sed, morbi eget enim eu porta, natoque integer pulvinar iaculis

MUSIC 2

vel, amet quisque congue parturient ipsum. Ante nunc porta sed excepturi orci diam. Blandit dictum suspendisse ultricies, mus dui et

fusce. Facilisi mi, parturient magna consectetuer, ut vel, fringilla et porta pellentesque.

Mi neque lectus amet a justo hymenaeos. In imperdiet magna arcu interdum orci, tempora vestibulum. Lacus egestas a suspendisse,

AMBIENCE 4

*FIGURE 1*

EP 3 276 623 A1

Lorem ipsum dolor sit amet, felis sed aliquam, tristique wisi ad metus curae et, tortor nulla cum vel libero vivamus sodales, justo

AMBIENCE 1

EFFECT 1    AMBIENCE 2

20

ultrices mattis ullamcorper vulputate, nascetur non eget a.    Quam quisque ipsum cursus dolor mauris dictum, dui

EFFECT 2    10

suspendisse gravida in etiam nisl, quos lorem ipsum porttitor, aliquam quam elit vulputate fusce ac dui, curae nisl. Ac a semper

EFFECT 3

vestibulum quisque, dictum odio nam, duis eros quae nibh arcu tristique, amet nibh augue volutpat dolor mauris.

EFFECT 4    10

Elit corrupti fusce quam urna ligula. Libero dolor libero curabitur, eu sed, morbi eget enim eu porta, natoque integer

20

pulvinar iaculis vel, amet quisque congue parturient ipsum.    Ante nunc porta sed excepturi orci diam. Blandit dictum

AMBIENCE 3

EFFECT 5

suspendisse ultricies, mus dui et fusce. Facilisi mi, parturient magna consectetuer, ut vel, fringilla et porta pellentesque.

MUSIC 1

News

Mi neque lectus amet a justo hymenaeos. In imperdiet magna arcu interdum orci, tempora vestibulum. Lacus

## FIGURE 2

EP 3 276 623 A1

TEXT

26

HARDWARE SYSTEM

16

11

12 PROCESSOR

DISPLAY

NETWORK

21

22

14 MEMORY

USER INTERFACE

18

AUDIO DATABASE

24 AUTOMATIC OPERATION SYSTEM

28 SOUNDTRACK DATA FILE

*FIGURE 3*

42

TEXT

26

NATURAL LANGUAGE PROCESSING ENGINE(s)    30

31

SEMANTIC ANALYSIS ENGINE(s)    32

33

AUDIO REGION DEFINITION ENGINE    34

35

MUSIC SELECTION OR MATCHING ENGINE    36

SOUNDTRACK GENERATION ENGINE    38

24

AUTOMATIC CREATION SYSTEM

28

SOUNDTRACK

## *FIGURE 4*

TEXT

26

NATURAL LANGUAGE PROCESSING
ENGINE(s)

30

| S1 | S2 | S3 | S4 |
| S5 | | S6 | S7 |
| S8 | S9 | | |

31

| | | S992 | S993 |
| S994 | S995 | S996 | S997 |
| S998 | | S999 | S1000 |

*FIGURE 5*

*FIGURE 6*

FIGURE 7A

60

E1 — aroused.txt
E6 — dull.txt
E2 — enthusiasm.txt
E8 — fearful.txt
E5 — idle.txt
E3 — pleasant.txt
E4 — relaxed.txt
E7 — unpleasant.txt

FIGURE 7B

fearful.txt

```
abhorrence
affright
affrightened
affrightening
affrightens
afraid
agitate
agitated
agitated
agitates
agitates
agitating
agitating
agitation
alarm
alarmed
alarming
alien
aliens
anger
angered
angering
angers
    .
    .
    .
```

| S1 | S2 | S3 | S4 |
|----|----|----|----|
| S5 | S6 || S7 |
| S8 | S9 ||||

| | S992 | S993 |
| S994 | S995 | S996 | S997 |
| S998 | S999 || S1000 |

31

LEXICON

E1
E2
E3
E4
E5
E6
E7
E8

60

SEMANTIC ANALYSIS
ENGINE(s) — 32

| SENTENCE | PROFILE |
|----------|---------|
| S1 | SEP1 |
| S2 | SEP2 |
| S3 | SEP3 |
| S4 | SEP4 |
| ⋮ | ⋮ |
| S1000 | SEP1000 |

33

*FIGURE 8*

E1
**High Arousal (HA)**
*Aroused*
*Astonished*
*Surprised*

E8
**HAN**
*Fearful*
*Hostile*
*Nervous*

**HAP** E2
*Enthusiastic*
*Elated*
*Excited*
*Euphoric*

**Unpleasant (N)**
E7 *Unhappy*
*Sad*
*Lonely*

**Pleasant (P)**
*Happy* E3
*Content*
*Satisfied*

**LAN**
*Dull*
*Sleepy*
*Sluggish*
E6

**Low Arousal (LA)**
*Idle*
*Passive*
*Inactive*
E5

**LAP**
*Relaxed*
*Calm*
*Peaceful* E4
*Serene*

## *FIGURE 9A*

E1
**High Arousal (HA)**
*Aroused*
*Astonished*
*Surprised*

E8
**HAN**                    **HAP**    E2

*Fearful*              *Enthusiastic*
*Hostile*                  *Elated*
*Nervous*                 *Excited*
                         *Euphoric*

**Unpleasant (N)**                          **Pleasant (P)**

E7    *Unhappy*              R              *Happy*    E3
       *Sad*                              *Content*
       *Lonely*                           *Satisfied*

**LAN**                              **LAP**
*Dull*                              *Relaxed*
*Sleepy*                             *Calm*
*Sluggish*    **Low Arousal (LA)**    *Peaceful*  E4
E6                *Idle*              *Serene*
                 *Passive*
                 *Inactive*
                   E5

# FIGURE 9B

| SENTENCE | PROFILE |
|----------|---------|
| S1 | SEP1 |
| S2 | SEP2 |
| S3 | SEP3 |
| S4 | SEP4 |
| ⋮ | ⋮ |
| S1000 | SEP1000 |

_33_

_34_

```
AUDIO REGION DEFINITION
ENGINE
```

_75_  _70_  _71_  _72_  _73_

TEXT REGIONS

| AUDIO REGION | START WORD | END WORD | PROFILE |
|--------------|-----------|----------|---------|
| AR1 | 1 | 1000 | XYZ |
| AR2 | 1001 | 2500 | ABC |
| AR3 | 2501 | 4000 | DEF |
| ⋮ | ⋮ | ⋮ | ⋮ |

_35_

## FIGURE 10

80

**Pre-processing**

Raw text ⟹ sentences    33

82

**Step 1**

sentences ⟹ **Algorithm 1**
Find any emotion in
the sentences and group ⟹ Region set 1    83

81

**Step 2**

Region set 1 ⟹ **Algorithm 2**
Group regions by minimum
length, e.g.300 "tokens"
per region minimum ⟹ Region set 2    86

83    84

**Step 3**

Region set 2 ⟹ **Algorithm 3**
Group regions by
emotional distance, if
distance<threshold
then group regions together ⟹ Region set 3    90

86    88

**Step 4**

Region set 3 ⟹ **Algorithm 4**
Re-apply chapter and
paragraph boundaries to
regions to make them flow
more "reader" natural ⟹ Final regions    94

Emotional
profiles    98

90    92

# FIGURE 11

**FIGURE 12**

**High Arousal (HA)**
*Aroused*
*Astonished*
*Surprised*

**HAN**
*Fearful*
*Hostile*
*Nervous*

**HAP**
*Enthusiastic*
*Elated*
*Excited*
*Euphoric*

**Unpleasant (N)**
*Unhappy*
*Sad*
*Lonely*

**Pleasant (P)**
*Happy*
*Content*
*Satisfied*

**LAN**
*Dull*
*Sleepy*
*Sluggish*

**LAP**
*Relaxed*
*Calm*
*Peaceful*
*Serene*

**Low Arousal (LA)**
*Idle*
*Passive*
*Inactive*

*FIGURE 13*

| TEXT REGION | | | |
|---|---|---|---|
| AUDIO REGION | START WORD | END WORD | PROFILE |
| AR1 | 1 | 1000 | XYZ |
| AR2 | 1001 | 2500 | ABC |
| AR3 | 2501 | 4000 | DEF |
| ⋮ | ⋮ | ⋮ | ⋮ |

*35*

*36* — MUSIC SELECTION OR MATCHING ENGINE ⟷ *22*

AUDIO DATABASE

*38* — SOUNDTRACK GENERATION ENGINE

*28*

SOUNDTRACK

# FIGURE 14

**High Arousal (HA)**
*Aroused*
*Astonished*
*Surprised*

**HAN**
*Fearful*
*Hostile*
*Nervous*

**HAP**
*Enthusiastic*
*Elated*
*Excited*
*Euphoric*

94

92

100

**Unpleasant (N)**
*Unhappy*
*Sad*
*Lonely*

**Pleasant (P)**
*Happy*
*Content*
*Satisfied*

AR1

90

98

**LAN**
*Dull*
*Sleepy*
*Sluggish*

**Low Arousal (LA)**
*Idle*
*Passive*
*Inactive*

**LAP**
*Relaxed*
*Calm*
*Peaceful*
*Serene*

96

50

# FIGURE 15

**ELECTRONIC PROFILING SYSTEM**

*112* — PROCESSOR

*114* — MEMORY

*116* — DISPLAY

*118* — USER INTERFACE

*120* — AUDIO OUTPUT

*110*

AUDIO DATABASE

*122*

AUDIO DATA

*124*

EMOTIONAL PROFILE DATA   *126*

# FIGURE 16A

Aroused
Astonished
Surprised

Fearful
Hostile
Nervous

Enthusiastic
Excited
Euphoric

Style ▼

Cinematic

World

134

Unhappy
Sad
Lonely

Happy
Content
Satisfied

▷ ⊂o⏤⏤⏤⏤⏤ 0:05 ◁) ⊂o⏤

Skip   Next

132

Slow
Sleepy
Sluggish

Relaxed
Peaceful
Serene

Passive
Inactive
Idle

NOT SUITABLE

130

136

140

138

*FIGURE 16B*

| | GENRE ∧ | STYLE ∨ | EMOTION ∨ |
|---|---|---|---|
| Science Fiction | Romance | | Young Adult / Teen |
| Horror | Fantasy | | Classics |
| Adventure | Scary Stories | | Crime |
| Young Readers | Biography/Memoir | | Humor & Comedy |
| Non-Fiction | Drama | | Fan Fiction / Pop Fiction |
| Historical / Period | Holiday | | Other |
| Mystery / Thriller | Sports | | Religious / Spiritual |

# FIGURE 17A

| | GENRE ∨ | STYLE ∧ | EMOTION ∨ |
|---|---|---|---|
| Acoustic | Alternative | | Ambient |
| Blues | Cinematic | | Country |
| Easy Listening | Electronic | | Folk |
| Funk | Jazz | | Kids / Quirky |
| Orchestral / Classical | Pop | | RnB / Reggae |
| Rock | World | | |

# FIGURE 17B

| | GENRE ∨ | STYLE ∨ | EMOTION ∧ | |
|---|---|---|---|---|
| Amazed-Surprised | Angry-Fearful | | Determined-Focused | |
| Happy-Pleased | Other | | Quiet-Curious | |
| Relaxing-Calm | Sad-Lonely | | Shocked-Confused | |

# FIGURE 17C

**Europäisches Patentamt**
**European Patent Office**
**Office européen des brevets**

# EUROPEAN SEARCH REPORT

Application Number

EP 17 18 3921

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2011/060106 A1 (DULCETTA INC [US]) 19 May 2011 (2011-05-19) <br> * paragraph [0006] * <br> * paragraph [0107] * <br> * paragraph [0012] * <br> * paragraph [0108] * <br> ----- | 1-15 | INV. <br> G10L25/63 <br> G06F17/24 <br> G11B27/36 <br> G09B5/06 |
| Y | CECILIA OVESDOTTER ALM ET AL: "Emotions from text", <br> HUMAN LANGUAGE TECHNOLOGY AND EMPIRICAL METHODS IN NATURAL LANGUAGE PROCESSING, ASSOCIATION FOR COMPUTATIONAL LINGUISTICS, N. EIGHT STREET, STROUDSBURG, PA, 18360 07960-1961 USA, <br> 6 October 2005 (2005-10-06), pages 579-586, XP058318305, <br> DOI: 10.3115/1220575.1220648 <br> * section 4 * <br> ----- | 1-15 | |
| A | PERIKOS ISIDOROS ET AL: "Recognizing emotions in text using ensemble of classifiers", <br> ENGINEERING APPLICATIONS OF ARTIFICIAL INTELLIGENCE, PINERIDGE PRESS, SWANSEA, GB, <br> vol. 51, 5 February 2016 (2016-02-05), pages 191-201, XP029470287, <br> ISSN: 0952-1976, DOI: 10.1016/J.ENGAPPAI.2016.01.012 <br> * figure 2 * <br> * section 2.2 * <br> ----- | 1-15 | TECHNICAL FIELDS SEARCHED (IPC) <br><br> G10L <br> G06F <br> G11B <br> G09B |

The present search report has been drawn up for all claims

| Place of search | Date of completion of the search | Examiner |
|---|---|---|
| The Hague | 12 December 2017 | Ziegler, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 18 3921

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2017

| Patent document cited in search report | Publication date | Patent family member(s) | | Publication date |
|---|---|---|---|---|
| WO 2011060106 A1 | 19-05-2011 | CN | 102687182 A | 19-09-2012 |
| | | EP | 2499626 A1 | 19-09-2012 |
| | | JP | 2013511214 A | 28-03-2013 |
| | | KR | 20120091325 A | 17-08-2012 |
| | | US | 2011195388 A1 | 11-08-2011 |
| | | US | 2013346838 A1 | 26-12-2013 |
| | | WO | 2011060106 A1 | 19-05-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013015694 A

- WO 2010002275 A
- US 20150025663 A